(19) Europäisches Patentamt
European Patent Office
Office européen des brevets

(11) **EP 3 744 476 B1**

(12) **EUROPEAN PATENT SPECIFICATION**

(45) Date of publication and mention of the grant of the patent:
**11.10.2023 Bulletin 2023/41**

(21) Application number: **19176819.1**

(22) Date of filing: **27.05.2019**

(51) International Patent Classification (IPC):
**B23Q 15/20** (2006.01) **B26D 5/00** (2006.01)
**B26F 1/38** (2006.01) **G05B 19/401** (2006.01)
**B26D 3/08** (2006.01)

(52) Cooperative Patent Classification (CPC):
**B26D 5/00; B26D 3/085; B26D 5/005; B26D 5/007; B26F 1/3813; G05B 19/401;** G05B 2219/37227; G05B 2219/37241; G05B 2219/45038; G05B 2219/49304

(54) **SYSTEM AND METHOD FOR CALIBRATING CUTTING PLOTTERS**

SYSTEM UND VERFAHREN ZUR KALIBRIERUNG VON SCHNEIDEPLOTTERN

SYSTÈME ET PROCÉDÉ D'ÉTALONNAGE DE TRACEURS DE DÉCOUPAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.12.2020 Bulletin 2020/49**

(73) Proprietor: **Summa**
**8470 Gistel (BE)**

(72) Inventors:
• **Depreeuw, Filip**
**8470 Gistel (BE)**

• **Tilleman, Kristof**
**8470 Gistel (BE)**

(74) Representative: **Ostyn, Frans et al**
**KOB NV**
**President Kennedypark 31 c**
**8500 Kortrijk (BE)**

(56) References cited:
**EP-A2- 2 769 813          WO-A1-2014/130747**
**DE-A1-102004 018 968     US-A- 5 418 711**
**US-A1- 2007 214 673**

EP 3 744 476 B1

## Description

### Field of technology

The present invention relates to the calibration of cutting plotters. More in particular, the present application relates to a system and a method for calibrating a tool of computer controlled (CNC) cutting plotters.

### Prior art

Computer controlled (CNC) cutting plotter systems known in the prior art, for example flatbed cutting plotters or (X-Y) plotters, are used for processing, for example cutting or creasing, of material, such as for example cutting films and/or other films, paper and cardboard. The processed material can be used for both decorative purposes, for example cut-out figures and characters for decorating mobile or immobile objects, as well as functional purposes, for example assembleable cardboard boxes.

Cutting plotters process material by controlling the position of a tool holder, containing a tool, relative to the material on the basis of instructions or commands from a processing unit. Depending on the material to be processed and the type of processing, a person skilled in the art can opt to mount another type of tool on the tool holder. By manually mounting the tool on the tool holder, the relative position of the machining end of the tool can differ from a reference position of the tool holder. This relative deviation, in the X, Y and Z direction, has a negative impact on the quality of the processing. A deviation can also occur due to the processing of the material.

A high degree of precision is required. This high degree of precision contributes to guaranteeing the consistency of the quality of the processing. The existing techniques for calibrating cutting plotter systems are time consuming because they must be done manually, for example the cutting plotter will cut out a test pattern and the straightest line must be selected via a monitor. Similar steps must be performed for lateral and longitudinal calibration. In addition, the existing systems have a limitation in accuracy because it depends on the "eye accuracy" of the trained operator.

WO2014130747 discloses a method for calibrating a tool of a cutting plotter as disclosed in the preamble of claim 1 and discloses a system for calibrating a tool of a cutting plotter. The electronic cutting machine disclosed in WO2014130747 comprises at least one housing to which a drive roller is coupled for moving a sheet to he cut in a first direction and a cutter assembly coupled to the housing and moveable in a second direction that is perpendicular to the first direction. I generally relates to an electronic cutting machine which includes, as main elements, the following items: a cover portion, a roller system, a blade and tool housing portion, a user input portion and multiple storage portions. A drawback of this system and method is the need for requesting previous stored data.

US2013104713 discloses a cutting plotter having a mechanical automated repositioning of the cutting blade. The automated repositioning of the cutting blade is important to rotate the cutting blade with an angle, in the direction of a desired cutting line, and of an angle respect to the object to be cut that is optimized to achieve a sharp cut. A drawback of this system and method is that the blade has to be adapted to swing above the object to be cut, adding in complexity and being prone to failure, secondly, the blade has to be calibrated beforehand after it has been installed on the cutter holder.

EP2687343 discloses a cutting device and method to prevent the jamming of the media to be cut. The jamming of the media is avoided by pre-cutting the media along a cutting line, leaving uncut portions on the media. After the cut-uncut pattern on the media is present, the media stays in place, and it can finally be cut simply by inserting the blade into the uncut zones, without having to move the blade neither back nor forward respect to the cutting line. If the uncut part of the media is larger than the blade itself, the blade is conveniently rotated 180 degrees and then inserted into the uncut zone. A disadvantage is that the blade still requires calibration after it is inserted on the tool holder.

Against the background of these and other problems identified by the inventors, there is a need for rapid, accurate and automatic techniques for calibrating cutting plotters.

### Summary of the invention

The invention aims in particular to overcomes these disadvantages of the prior art. More in particular, an object of the present invention is to provide a method for calibrating a tool of a cutting plotter, wherein the tool is in contact with a tool holder which is connected to a processing unit, the tool comprising a machining end extending between a first outer edge and a second outer edge along a lateral direction (X-direction), the method comprising firstly introducing, by means of a motorised displacement of the tool holder, a predetermined part of the machining end of the tool to a first initial position into a measuring zone of a measuring system of a tool-setting device, wherein the tool-setting device is connect to the processing unit. Further, the method provides the step of determining, by means of the measuring system, a first width W1 of the tool in the measuring zone of the measuring system, wherein the first width W1 equals the distance measured along the lateral direction (X-direction) between the first outer edge and the second outer edge of the predetermined part of the machining end of the tool. Further, the method provides the step of rotating, by means of a motorised rotation of a tool holder rotational axis, the predetermined part of the machining end of the tool over a predetermined first angle of rotation $\alpha 12$, wherein the first angle of rotation $\alpha 12$ is in the range of -90° to +90° with respect to the first initial position and different from 0°, and wherein the tool holder rotational axis is substantially perpendicular to the measuring zone of the measuring system. Further, the method provides the step of determining, by means of the measuring system, a second width W2 of the tool in the measuring zone of the measuring system, wherein the second width W2 equals the distance measured along the lateral direction (X-direction) between the first outer edge and the second outer edge of the rotated predetermined part of the machining end of the tool. Further, the method provide the step of determining, by means of the processing unit, an angular deviation $\delta$ of the tool with respect to an optimum machining direction according to a desired angular deviation accuracy on the basis of the determined first width W1 and the determined second width W2. An advantage of this preferred embodiment is the provision of a method which is automated, and thus efficient for determining the angular deviation $\delta$ of cutting or scoring tools for processing cutting or scoring process of hard materials, roll materials and sheets. The method makes it possible to accurately and quickly determine the angular deviation $\delta$ of a predetermined part of the machining end of the tool in a first initial position into a measuring zone of a measuring system of a tool-setting device, so that it is possible to correct for this deviation and to cut or score extremely precisely in the material. Moreover, this method is independent of the type of cutting or scoring tool being selected, i.e. the characteristics of the tool do not need to be determined or measured in advance in order to determine the angular deviation $\delta$. Moreover, an advantage of the method according to an embodiment of the invention is a reduced wear of the tool.

In a particular embodiment of the invention, a rotation is provided prior to determining the first width W1 of the tool in the measuring zone of the measuring system, by means of a motorised rotation of the tool holder rotational axis, wherein the predetermined part of the machining end of the tool rotates over a predetermined first initial angle of rotation $\alpha 01$, wherein the predetermined first initial angle of rotation $\alpha 01$ is in the range -90° to 90° with respect to the first initial position and different from 0°, wherein the first angle of rotation $\alpha 12$ follows a relationship $|\alpha 01| < \alpha 12 < (90° + |\alpha 01|)$ for -90° < $\alpha 01$ < 0° or a relationship $(-90° - \alpha 01) < \alpha 12 < -\alpha 01$ for 0° < $\alpha 01$ < 90°. An advantageous aspect of this invention is that the angular deviation $\delta$ of the tool can be determined for a wide range of tools, in contrast to an embodiment of the invention as described in claim 1. In particular, this preferred method also allows the angular deviation $\delta$ to be accurately determined for tools wherein, in the measuring zone of the measuring system, the machining end width is relatively large compared to the machining end length.

In a particular embodiment of the invention, a method is provided wherein the first angle of rotation $\alpha 12$ follows a relationship $(2|\alpha 01| - 1°) \leq \alpha 12 \leq (2|\alpha 01| + 1°)$, in particular $(2|\alpha 01| - 0.5°) \leq \alpha 12 \leq (2|\alpha 01| + 0.5°)$, preferably $(2|\alpha 01| - 0.1°) \leq \alpha 12 \leq (2|\alpha 01| + 0.1°)$, even more preferably $2|\alpha 01| = \alpha 12$ for -90° < $\alpha 01$ < 0°, or a relationship $(2(\alpha 01) - 1°) \leq -\alpha 12 \leq (2(\alpha 01) + 1°)$, in particular $(2(\alpha 01) - 0.5°) \leq -\alpha 12 \leq (2(\alpha 01) + 0.5°)$, preferably $(2(\alpha 01) - 0.1°) \leq -\alpha 12 \leq (2(\alpha 01) + 0.1°)$, even more preferably $2(\alpha 01) = -\alpha 12$ for 0° < $\alpha 01$ < 90°. An advantageous aspect of this invention is that the angular deviation $\delta$ of the tool can be determined for a wide range of tools. In particular, this preferred method also allows the angular deviation $\delta$ to be accurately determined for tools wherein, in the measuring zone of the measuring system, the machining end width is relatively large compared to the machining end length.

According to a preferred embodiment of the present invention, a method is provided comprising a first step of rotating, by means of a motorised rotation of the tool holder rotational axis, the predetermined part of the machining end of the tool from the first initial position over the determined angular deviation $\delta$ of the tool into a second initial position. Further, the method comprises the step of rotating, by means of a motorised rotation of the tool holder rotational axis, the predetermined part of the machining end of the tool over a predetermined second initial angle of rotation $\alpha 23$, wherein $\alpha 23$ is in the range -90° to 90° with respect to the second initial position and different from 0°. The method, further comprises determining, by means of the measuring system, a third width W3 of the tool in the measuring zone of the measuring system, wherein the third width W3 equals the distance measured along the lateral direction (X-direction) between the first outer edge and the second outer edge of the further rotated predetermined part of the machining end of the tool. Then, the method comprises rotating further, by means of a motorised rotation of the tool holder rotational axis, the rotated predetermined part of the machining end of the tool over predetermined second angle of rotation $\alpha 34$, wherein the second angle of rotation $\alpha 34$ follows a relationship $|\alpha 23| < \alpha 34 < (90° + |\alpha 23|)$ for -90° < $\alpha 23$ < 0° or a relationship $(-90° - \alpha 23) < \alpha 34 < -\alpha 23$ for 0° < $\alpha 23$ < 90°. Further, the method comprises determining, by means of the measuring system, a fourth width W4 of the tool in the measuring zone of the measuring system, wherein the fourth width W4 equals the distance measured along the lateral direction (X-direction) between the first outer edge and the second outer edge of the further rotated predetermined part of the machining end of the tool. Further, the method comprises determining, by means of the processing unit, an angular deviation $\delta$ of the tool with respect to an optimum machining direction according to a desired angular deviation accuracy on the basis of the determined third width W3 and the determined fourth width W4. An advantage of this embodiment is that the angular deviation $\delta$ can be determined with a high degree of accuracy. Moreover, this method is independent of the type of cutting or scoring tool being selected, i.e. the characteristics of the tool do not need to be determined or measured in advance in order to determine the angular deviation $\delta$. Moreover, an advantage of the method according to an embodiment of the invention is a reduced wear of the tool.

According to a preferred embodiment of the invention, the second angle of rotation $\alpha34$ follows a relationship $(2|\alpha23| - 1°) \leq \alpha34 \leq (2|\alpha23| + 1°)$, in particular $(2|\alpha23| - 0.5°) \leq - \alpha34 \leq (2|\alpha23| + 0.5°)$, preferably $(2|\alpha23| - 0.1°) \leq - \alpha34 \leq (2|\alpha23| + 0.1°)$, even more preferably wherein $2|\alpha23| = - \alpha34$ for $-90° < \alpha23 < 0°$, or a relationship $(2(\alpha23) -1°) \leq - \alpha34 \leq (2(\alpha23) + 1°)$, in particular $(2(\alpha23) - 0.5°) \leq - \alpha34 \leq (2(\alpha23) + 0.5°)$, preferably $(2(\alpha23) - 0.1°) \leq - \alpha34 \leq (2(\alpha23) + 0.1°)$, even more preferably $2(\alpha23) = - \alpha34$ for $0° < \alpha23 < 90°$. An advantageous aspect of this invention is that the angular deviation $\delta$ of the tool can be determined for a wide range of tools, in contrast to an embodiment of the invention as described in claim 1. In particular, this preferred method also allows the angular deviation $\delta$ to be accurately determined for tools wherein, in the measuring zone of the measuring system, the machining end width is relatively large compared to the machining end length.

According to a preferred method of the invention, a method is provided for determining, by means of the measuring system, the shape or spatial characteristics of the tool before introducing the predetermined part of the machining end of the tool into the measuring zone of the measuring system. An advantageous aspect of the invention is that if the tool is already known, the introduction of the tool into the measuring zone can proceed more rapidly since a predetermined position of the machining end of the tool relative to the measuring zone of the measuring system of the tool-setting device is already known. If the tool is not yet known in a memory, for example database, of the processing unit, this method has the advantage that the shape or spatial characteristics can be added to the memory of the processing unit so that the method can be performed faster in a subsequent application of this tool.

According to a preferred method of the invention, a method is provided for determining the shape or spatial characteristics of the tool. An advantageous aspect of the invention is that the introduction of the tool into the measuring zone can proceed more rapidly or more effectively since a predetermined position of the machining end of the tool relative to the measuring zone of the measuring system of the tool-setting device is already known.

According to a preferred embodiment of the invention, it is provided that the measuring system is a laser beam measuring system adapted to determine the widths of the tool in the measuring zone at a lateral displacement allowing a predetermined measuring speed in the range of 10 mm/s - 250 mm/s, preferably 25 mm/s - 250 mm/s, even more preferably 50 mm/s - 250 mm/s.

A particular embodiment of the invention provides a method for calibrating a tool of a cutting plotter, the method comprising at least a first step of rotating, by means of a motorised rotation of the tool holder rotational axis, the predetermined part of the machining end of the tool from the first initial position over the determined angular deviation $\delta$ of the tool. The method further comprises a step of measuring, by means of the measuring system, a first lateral distance L1 between a lateral tool reference point on the predetermined part of the machining end of the tool and a lateral reference point in the measuring zone of the measuring system. The method further comprises rotating, by means of a motorised rotation of the tool holder rotational axis, the predetermined part of the machining end of the tool over an angle of 180°. The method further comprises the step of measuring, by means of the measuring system, a second lateral distance L2 between the lateral tool reference point on the tool and the lateral reference point in the measuring zone of the 180° rotated predetermined part of the machining end of the tool. The method further comprises the step of determining, by means of the processing unit, a lateral deviation of the tool based on the measured first lateral distance L1 and the measured second lateral distance L2. An advantage of this preferred embodiment is the provision of a method which is automated, and thus efficient for determining the lateral deviation of the cutting or scoring tools for cutting or scoring process of hard materials, roll materials and sheets. The method makes it possible to accurately and quickly determine the lateral deviation, so that it is possible to cut or score extremely precisely in the material. Moreover, this method is independent of the type of cutting or scoring tool being selected, i.e. the characteristics of the tool do not need to be determined or measured in advance in order to determine the lateral deviation. Moreover, an advantage of the method according to an embodiment of the invention is a reduced wear of the tool.

A particular embodiment of the invention provides a method for determining a longitudinal deviation of the tool, the method providing a step of rotating, by means of a motorised rotation of the tool holder rotational axis, the predetermined part of the machining end of the tool from the first initial position over the determined angular deviation $\delta$ of the tool. Further, the method comprises rotating, by means of a motorised rotation of the tool holder rotational axis, the predetermined part of the machining end of the tool over an angle of 90°. The method further comprises measuring, by means of the measuring system, a first longitudinal distance L01 between the a longitudinal tool reference point on the predetermined part of the machining end of the tool and a longitudinal reference point in the measuring zone of the measuring system. The method also comprises rotating, by means of a motorised rotation of the tool holder rotational axis, the predetermined part of the machining end of the tool over an angle of 180°. Then, the method comprises measuring, by means of the measuring system, a second longitudinal distance L02 between the longitudinal tool reference point on the predetermined part of the machining end of the tool and the longitudinal reference point in the measuring zone. Finally, the method comprises the step of determining, by means of the processing unit, a longitudinal deviation of the tool based on the first longitudinal distance L01 and the second longitudinal distance. An advantage of this preferred embodiment is the provision of a method which is automated, and thus efficient for determining the longitudinal deviation of the cutting or scoring tools for cutting or scoring process of hard materials, roll materials and sheets. The method makes it possible to accurately and quickly determine the longitudinal deviation, so that it is possible to cut or score extremely precisely in the material. Moreover, this method is independent of the type of cutting or scoring tool being selected, i.e. the characteristics of the tool do not need to be determined or measured in advance in order to determine the longitudinal deviation. Moreover, an advantage of the method according to an embodiment of the invention is a reduced wear of the tool.

According to a preferred embodiment of the invention, a method for calibrating cutting plotters is provided, wherein the tool is selected from the group consisting of cutting tools and creasing tools.

Another aspect of the invention provides for a system for calibrating a tool of a cutting plotter, the system comprises a tool-setting device comprising a measuring system, a tool holder adapted to perform a motorised displacement of the tool with respect to the tool-setting device, wherein the tool-setting device and the tool holder are connected to a processing unit, wherein the processing unit is adapted for determining an angular deviation $\delta$ of the tool with respect to an optimum machining direction according to a desired angular deviation accuracy, wherein the processing unit is adapted for determining a lateral deviation of the tool, and wherein the processing unit is adapted for determining a longitudinal deviation, wherein the measuring system is selected from the group consisting of an optical measuring system, a video measuring system and a scanner, and wherein the measuring system defines a measuring zone for receiving at least a part of a machining end of the tool. An advantage of this preferred embodiment is the provision of a system which is automated, and thus efficient for determining the angular deviation $\delta$ of cutting or scoring tools for processing cutting or scoring process of hard materials, roll materials and sheets. The system makes it possible to accurately and quickly determine the angular deviation $\delta$, so that it is possible to cut or score extremely precisely in the material. Moreover, this system is adapted for calibrating a tool of a cutting plotter independently of the type of cutting or scoring tool being selected, i.e. the characteristics of the tool do not need to be determined or measured in advance in order to determine the angular deviation $\delta$. Moreover, an advantage of the using a system according to an embodiment of the invention is a reduced wear of the tool.

Another aspect of the invention involves the system for calibrating a tool of a cutting plotter according to the aforementioned embodiment, wherein the optical measuring system is a laser measuring system, which laser measuring system is provided with a laser source adapted to generate at least one laser beam.

Another aspect of the invention involves the use of the system according to the aforementioned preferred embodiments for calibrating tools in a cutting plotter environment.

Another aspect of the invention provides for a computer program comprising instructions for causing the system for calibrating a tool to perform the steps of the method according to any of the aforementioned embodiments.

Another aspect of the invention comprises a computer-readable medium with the computer program stored thereon according to a preferred embodiment of the invention.

## Brief description of the drawings

In order to better demonstrate the characteristics of the invention, there is described below, purely as an example and without being in any way whatsoever limiting, at least one preferred embodiment of a method and system for calibrating tools of a cutting plotter with reference to the accompanying figures, in which:

- Figure 1, abbreviated as "Fig. 1", is a schematic representation of a system for calibrating tools of a cutting plotter according to an embodiment of the present invention;
- Figure 2, abbreviated as "Fig. 2" is an isometric view of a tool holder and tool-setting device comprising a measuring system;
- Figure 3A, abbreviated as "Fig. 3" illustrates a schematic representation of a vertical cross-section of a tool and the machining end.
- Figure 3B, abbreviated as "Fig. 3B" illustrates a schematic representation of the top view of Figure 3A, showing the tool and the machining end and the difference between them.
- Figure 4A, abbreviated as "Fig. 4A" is a schematic representation of a top view of a tool in its initial position.
- Figure 4B, abbreviated as "Fig. 4B" is a schematic representation of a top view of a tool to be calibrated, comprising an angular, lateral and longitudinal deviation, with respect to the tool in its initial position.
- Figure 5A, abbreviated as "Fig. 5A" illustrates a schematic representation of a top view of a horizontal cross-section of a tool for determining a longitudinal deviation of the tool.
- Figure 5B, abbreviated as "Fig. 5B" illustrates a schematic representation of a top view of a horizontal cross-section of a tool for determining a longitudinal deviation of the tool.
- Figure 6, abbreviated as "Fig. 6", depicts a schematic representation of a top view of a horizontal cross-section of a tool containing an angular deviation $\delta$ with respect to an optimum machining direction.
- Figure 7A, abbreviated as "Fig. 7A" illustrates a schematic representation of a top view of a horizontal cross-section of a tool for determining a lateral deviation of the tool.

- Figure 7B, abbreviated as "Fig. 7B" illustrates a schematic representation of a top view of a horizontal cross-section of a tool for determining a lateral deviation of the tool.
- Figure 8, abbreviated as "Fig. 8" illustrates possible tools to be used for cutting or scoring/creasing.
- Figure 9, abbreviated as "Fig. 9" illustrates the difference between actual width and the width of the tool in the measuring zone, and the parameters associated with the machining end and the various widths of the tool and the machining end.
- Figures 10A, 10B, and 10C, abbreviated as "Fig.10A", "Fig.10B", and "Fig.10C" are a schematic representation of a top view of a horizontal cross-section of a tool in the measuring zone according to an embodiment of the present invention, wherein a width is firstly measured.
- Figures 11A, 11B, 11C and 11D, abbreviated as "Fig.11A", "Fig.11B", "Fig.11C", and "Fig.11 D" are a schematic representation of a top view of a horizontal cross-section of a tool in the measuring zone according to one embodiment of the present invention, wherein a rotation is firstly applied to the tool.
- Figures 12A, 12B, and 12C, abbreviated as "Fig.12A", "Fig. 12B", and "Fig.12C" are a schematic representation of a top view of a horizontal cross-section of a tool in the measuring zone according to an embodiment of the present invention, wherein a rotation is also firstly applied to the tool.
- Figure 13, abbreviated as "Fig. 13", illustrates a schematic representation of the angles and the distances used to calculate the width of the tool in the measuring zone W.

## Detailed description

The following detailed description aims to describe preferred embodiments of the invention and is not intended to be a limited representation of the only embodiments in which the invention can occur or be applied. The description seeks to be clear about the functionalities and steps necessary to construct and operate the invention.

The drawings described are merely schematic and not limiting.

Furthermore, the terms first, second, third fourth and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

The Applicant's disclosure is described in preferred embodiments in the following description with reference to the Figures, in which like numbers represent the same or similar elements. Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

In the following description, numerous specific details are recited to provide a thorough understanding of embodiments of the invention.

The systems and methods described in this text provide a simple, efficient and accurate way to calibrate tools used in a cutting plotter environment. Cutting plotters are adapted for cutting cardboard, paper, roll material, synthetic material, foam board, wood and special material.

When in an embodiment of the present invention reference is made to "an angular deviation $\delta$ of the tool", reference can be made to an angular deviation $\delta$ of the tool with respect to an optimum machining direction according to a desired angular deviation accuracy, wherein the angular deviation $\delta$ is measured in a plane which is substantially parallel to the material processing surface of a cutting plotter.

When in an embodiment reference is made to "the material processing surface of a cutting plotter", reference can be made to an outermost main surface of a cutting plotter on which the material to be processed can rest, for example a vacuum table in the context of flatbed cutting plotters.

When in an embodiment of the present invention reference is made to "lateral direction", reference is made to a direction that according to the Cartesian coordinate system, is along the X-axis. When in an embodiment of the present invention reference is made to "longitudinal direction", reference is made to a direction that according to the Cartesian coordinate system, is along the Y-axis. When in an embodiment of the present invention reference is made to "vertical direction", reference is made to a direction that according to the Cartesian coordinate system, is along the Z-axis. Hence, it has to be intended that the lateral direction, the longitudinal direction and the vertical direction are all perpendicular respect to each other.

When in an embodiment of the present invention reference is made to "a first initial position" or "an initial position", reference is made to a position in which a predetermined part of the machining end of the tool is set or introduced into a measuring zone of a measuring system of a tool-setting device. In this first initial position or initial position, the tool may have an angular deviation $\delta$ with respect to an optimum machining direction according to a desired angular deviation accuracy. In this first initial position or initial position, the tool may also have a lateral and longitudinal deviation with respect to an optimum machining direction.

When in an embodiment of the present invention reference is made to "linear deviation", reference is made to the displacement from the initial position of a point chosen on the tool, to the rotated position of the same point chosen on the tool. It has to be understood that the deviation is a vector having X-Y components.

When in an embodiment of the present invention reference is made to "angular deviation $\delta$", reference is made to the angular displacement of the tool from the initial angle, which initial angle is parallel to the optimum machining direction, and the rotated angle of the tool, respect to this optimum machining direction.

When in an embodiment of the present invention reference is made to "lateral deviation", reference is made to the X-component of the deviation. When in an embodiment of the present invention reference is made to "longitudinal deviation", reference is made to the Y-component of the deviation. When in an embodiment of the present invention reference is made to "angular deviation $\delta$", reference is made to the X-component of the deviation.

When in an embodiment of the present invention reference is made to "lateral direction", reference is made to a direction that according to the Cartesian coordinate system, is along the X-axis. When in an embodiment of the present invention reference is made to "longitudinal direction", reference is made to a direction that according to the Cartesian coordinate system, is along the Y-axis. When in an embodiment of the present invention reference is made to "vertical direction", reference is made to a direction that according to the Cartesian coordinate system, is along the Z-axis. Hence, it has to be intended that the lateral direction, the longitudinal direction and the vertical direction are all perpendicular respect to each other.

When in an embodiment of the present invention reference is made to "calibrating", reference can be made to comparing, establishing and determining a spatial position or orientation of a tool according to the Cartesian coordinate system, in particular of at least a part of a machining end 5 of the tool, with a standard or a reference setting of a tool holder 4, with a view to performing an operation according to an optimum machining direction. A person skilled in the art will therefore appreciate that adjusting or setting the tool or the tool holder 4 on the basis of the determined deviation, either an angular deviation $\delta$, a longitudinal deviation or lateral deviation, is an additional, logical step which does not need to be mentioned continually in the remainder of the application.

When in an embodiment of the present invention reference is made to "tools", reference is made to cutting or scoring tools, wherein cutting tools are adapted for cutting material, and wherein scoring tools are adapted for scoring material. The cutting or the scoring of the material can be carried out on the basis of a machining direction.

When in an embodiment of the present invention reference is made to "machining direction", reference can be made to the direction towards which the machining end of the tools operates by cutting or scoring the material to be cut or scored. Is has to be understood that the optimum machining direction is the preferred direction towards which the machining end of the tool operates by cutting or scoring.

When in an embodiment of the present invention reference is made to "measuring system", reference can be made to an optical measuring system which comprises optical measuring instruments such as laser measuring systems or profile projectors, as well as to video measuring systems and scanners. The measuring systems must be adapted to at least detect or perceive an object in a measuring zone, and to exchange the data with a processing unit. With video measuring systems, the image is detected by a camera and optionally displayed on a monitor connected to a processing unit. Measurement points can be automatically recorded by the computer and the measurements from the measuring points can be calculated and reported. The great advantage of these systems lies mainly in ease of use and speed of measurement. The systems can be equipped with additional sensors to enable multiple types of measurements.

When in an embodiment of the present invention reference is made to "machining end", reference is made to the part of the tool 1 positioned between the cross-section of the tool at which the width, for example W1, W2, W3 or W4, was calculated, and the supporting surface of the measuring system 31. In case the measuring system measures by means of lasers, the machining end 5 of the tool 1 is the part of the tool 1 comprised between the height of the laser beam 12 and the supporting surface.

When in an embodiment of the present invention reference is made to "angle of rotation", reference is made to the an angle measured with respect to a position of a predetermined part of a machining end of a tool into a measuring zone of a measuring system, wherein an angle of rotation having a positive value, i.e. higher than 0°, may refer to anti-clockwise sense rotational direction with respect to the position of a predetermined part of a machining end of a tool into a measuring zone of a measuring system in a plane substantially parallel to the measuring zone. An angle of rotation having a negative value, i.e. lower than 0°, may refer to clockwise sense rotational direction with respect to the position of a predetermined part of a machining end of a tool into a measuring zone of a measuring system in a plane substantially parallel to the measuring zone.

When in an embodiment of the present invention reference is made to "width of the tool 1 in the measuring zone", reference is made to the width of the machining end of the tool 1 as seen from an observer facing the tool 1 positioned parallel to the lateral direction. In other words, the "width of the tool 1 in the measuring zone" is the distance between the first outer edge and the second outer edge of the machining end 5 of the tool 1 as seen from the lateral direction, therefore measured along the lateral direction (X-direction) of the machining end of the tool 1. With respect to the present invention, with first outer edge 32 and second outer edge 33 are meant two edges of the tool 1 extending from the tool 1, which first outer edge 32 and second outer edge 33 are positioned at the perimeter of a section of the tool 1 perpendicular to the longest dimension of the tool 1 (which longest dimension is usually along the Z-component, and therefore the vertical direction), which section of the tool 1 is the cutting plane having as cutting plane line at least one part of the line at which the width of the tool 1 in the measuring zone is measured, and which first outer edge and second outer edge are the farthest away from each other among all the possible outer edges along the cutting plane line. In the circumstance in which the a laser beam 19 is used to measure the width, the height of the laser beam 12 is at the height of the cutting plane line.

According to the present invention, the width of the tool 1 in the measuring zone W is measured by the measuring system, and such width is measured several times. W1, W2, W3 and W4 are measures of width of predetermined part of the machining end the tool 1 in the measuring zone measured in accordance with the present invention, prior or after a specific displacement or rotation of the tool 1 in the measuring zone. It has to be understood in the context of the present invention, that the "width of the tool 1 in the measuring zone" can differ from the machining end width MB of the tool 1, for example, when the tool 1 is rotated. It has to be understood, that the width of the tool 1 in the measuring zone is measured at a predetermined height from the supporting surface, in case the measuring system utilized by the present invention is a laser measuring system, this predetermined height is the height of the laser beam 12 form the supporting surface.

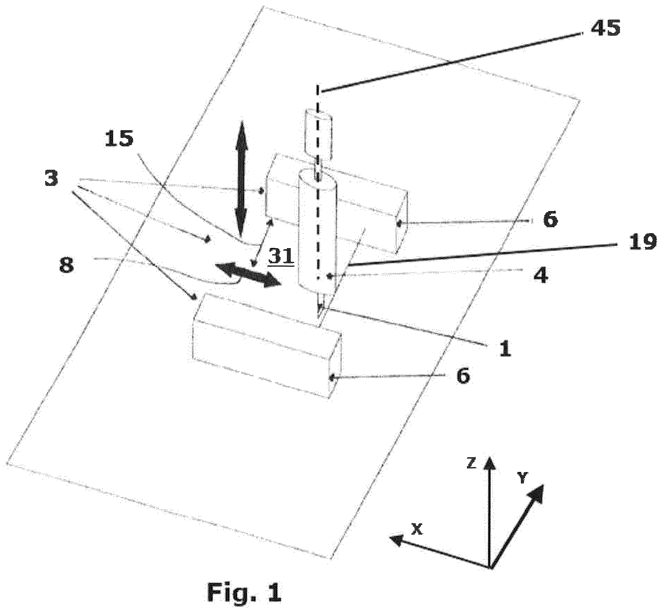

Referring to Figure 1, an example is illustrated of a system for calibrating a tool 1 of a cutting plotter, the system comprises a tool-setting device 3 comprising a measuring system 6, a tool holder 4 adapted to perform a motorised displacement of the tool 1 with respect to the tool-setting device 3; wherein the tool-setting device 3 and the tool holder 4 are connected to a processing unit, wherein the processing unit is adapted for determining an angular deviation $\delta$ of the tool 1 with respect to an optimum machining direction according to a desired angular deviation accuracy on the basis of a determined first width W1 and a determined second width W2, according to any of the previous preferred embodiments, wherein the processing unit is adapted for determining a lateral deviation 17 of the tool 1 according to any of the previous preferred embodiments, and wherein the processing unit is adapted for determining a longitudinal deviation 11 according to any of the previous preferred embodiments, wherein the measuring system 6 is selected from the group consisting of an optical measuring system, a video measuring system and a scanner, and wherein the measuring system 6 defines a measuring zone for receiving at least a part of a machining end 5 of the tool 1.

Referring to Figure 1, an example is illustrated of a system for calibrating a tool 1 of a cutting plotter according to any of the previous embodiments, wherein the optical measuring system is a laser measuring system, which laser measuring system is provided with a laser source adapted to generate at least one laser beam 19.

The desired angular deviation accuracy can be adjusted, if necessary, manually, with the aid of the processing unit and can be expressed in degrees (°) or radians (rad). According to a preferred embodiment of the invention, the angular deviation accuracy can be at least 1°, preferably at least 0.5° and even more preferably at least 0.1°. A person skilled in the art will appreciate that under a greater angular deviation accuracy, it should be appreciated that the angular deviation $\delta$ of the tool 1 can be determined more accurately with respect to an optimum machining direction.

The tool holder 4 is configured to introducing, by means of a motorised displacement, at least a predetermined part of a machining end 5 of the tool 1 into a measuring zone of a measuring system 6 of the tool-setting device 3, wherein the tool-setting device 3 is connect to the processing unit, and setting, by means of a motorised displacement, a predetermined machining position of the machining end 5 of the tool 1 in the measuring zone of the measuring system 6.

The measuring zone of the measuring system 6 is a 3D space into which the tool 1 can be introduced. The bottom of the measuring zone is the supporting surface of the measuring system 31. According to an embodiment of the present invention, the shape or spatial characteristics of the tool 1 are determined before introducing the predetermined part of the machining end 5 of the tool 1 into the measuring zone of the measuring system 6, the shaper or spatial characteristics of the tool can be determined by reading an identification code on the tool 1. With the first angle of rotation $\alpha12$ being predetermined or either the first initial angle of rotation $\alpha01$ being predetermined or either the second initial angle of rotation $\alpha23$ being predetermined or either the second angle of rotation $\alpha34$ being predetermined, is meant that the angle has been measured previously based on the type of tool used, or the type of material used. The measured angles may be stored in the processing unit based on an identification code of the tool. The identification code on the tool can be used to easily retrieve the predetermined angles necessary to set the tool rotation according to the present invention, or some of the predetermined angles necessary, calculating the remaining according to formulae described in other embodiments of the present invention, or in the prior art.

Preferably, the predetermined machining position of the tool 1 in the measuring zone of the measuring system 6 can be the lowest position of the machining end 5 of the tool 1 with respect to a lower main bearing surface of the tool-setting device 3. The setting and introduction of at least a predetermined part of a machining end 5 of the tool 1 can be effected by moving the tool holder 4 up and down in the Z-direction, the Z-direction being substantially perpendicular to the measuring zone of the measuring system 6. Once the predetermined part of the machining end 5 of the tool is introduced into the measuring zone of a measuring system 6 of a tool-setting device 3, wherein the tool-setting device 3 is connect to the processing unit, the tool or the predetermined part of the machining end 5 of the tool 1 is in its first initial position.

Furthermore, the tool holder 4 is configured for rotating around a tool holder rotational axis 45 over a predetermined first angle of rotation $\alpha12$ on the basis of the desired angular deviation accuracy, the first angle of rotation $\alpha12$ being in the range of -90° to +90° with respect to the first initial position of a predetermined part of the machining end 5 of the tool 1 to into a measuring zone of a measuring system 6 of a tool-setting device 3, and wherein $\alpha12$ is different from 0°, wherein the tool holder axis of rotation of the tool holder 4 is substantially perpendicular to the measuring zone of the measuring system 6. The tool holder rotational axis 45 coincides substantially with the longitudinal axis of the tool holder 4, whereby rotation of the tool holder 4 around a tool holder rotational axis 45 can result in an angular displacement of at least a part of the machining end 5 of the tool 1 in a plane which is substantially parallel to the measuring zone or the material processing surface. If the first angle of rotation $\alpha12$ is positive, then the tool holder 4 is driven by the processing unit to perform a turn or rotation, from an initial position, anticlockwise in a plane substantially parallel to the measuring zone or the material processing surface. Conversely, if the first angle of rotation $\alpha12$ is negative, then the tool carrier 4 is driven by the processing unit to perform a turn or rotation, from an initial position, clockwise in a plane substantially parallel to the measuring zone or the material processing surface.

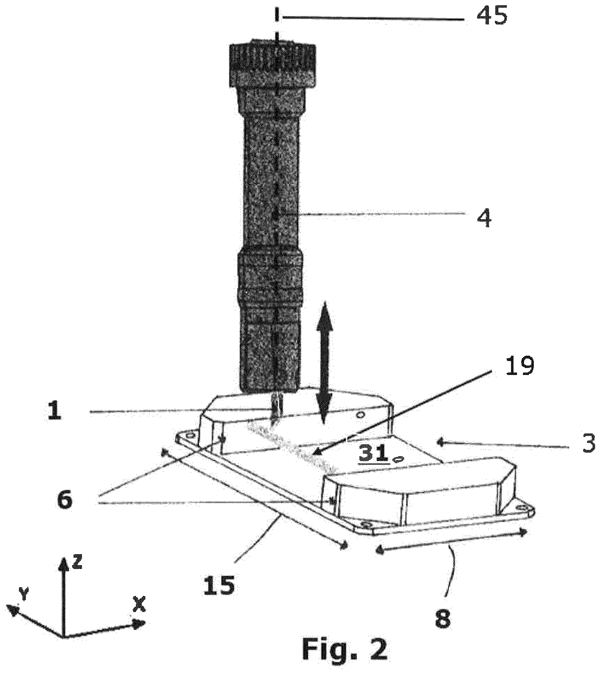

The processing unit comprises one or more computers with a memory and a processor and is configured with a view to determining a first width W1 of the tool 1 in the measuring zone of the measuring system 6 and of a second width W2 of the tool 1 in the measuring zone of the measuring system 6. A first or a second width of the tool 1 in the measuring zone of the measuring system 6 means the width measured in the lateral direction 8 in the measuring zone. The first width W1 equals the distance measured along the lateral direction 8 (X-direction) from the first outer edge 32 to the second outer edge 33 of the predetermined part of the machining end 5 of the tool 1, and the second width W2 equals the distance measured along the lateral direction 8 (X-direction) from the first outer edge 32 to the second outer edge 33 of the rotated predetermined part of the machining end 5 of the tool 1. If the angular deviation $\delta$ of the tool 1 in the measuring zone is minimal, the determined width will also be minimal. Depending on the measuring system used 6, the width of the tool in the measuring zone can be determined in a different way. More in particular, when using an optical measuring system 6 such as a laser measuring system with a single laser beam 19 as illustrated in Figure 1 and Figure 2, the processing unit must drive the tool holder 4 to carry out a displacement along the lateral direction 8 in the measuring zone. The width can then be determined as the lateral distance over which the laser beam 19 of the laser measuring system is interrupted. In other words, the start of the width measurement takes place when the tool 1, in particular the tool tip which is already set at the correct depth in the measuring zone of the measuring system 6, interrupts the laser beam, and ends when the interruption of the laser beam 19 stops.

It should be noted that according to a preferred embodiment of the invention, the invention cannot directly determine the angular deviation $\delta$ without at least determining a first width W1 and a second width W2. The processing unit can determine the angular deviation $\delta$ of the tool 1 of the optimum machining direction according to the desired angular deviation accuracy on the basis of the determined first width W1 and the determined second width W2.

The processing unit may contain one or more computers which can take different forms, such as any workstation, any server, or any other computer device that can process information. In a number of aspects of the invention, the processing unit may be contained in a cutting plotter for controlling the components of the invention. Each of the computers can also be connected by means of any suitable communication technology (for example an internet protocol) to a network (for example the internet). Accordingly, the computers can transmit and receive information amongst themselves (e.g., software, digital representations of tools, commands or instructions to operate cutting plotter equipment, etc.) via the network. It should be noted that although the system and the processing unit have been described with respect to a network and one or more computers, the techniques described in this text are also applicable to a single computer which can be directly connected to a cutting plotter or cutting plotter equipment.

According to a preferred embodiment of the invention, the system comprises a processing unit containing one or more computers with a memory and a processor, the processing unit being configured with a view to performing the steps as described in at least one of the preferred methods as described below. The processing unit is connected to the measuring system 6 and, by means of the one or more processors, can detect at least a part of the machining end 5 of the tool 1 in the measuring zone.

The processor can be a universal processor or a digital signal processor (DSP), an application-specific integrated circuit (ASIC), a field-programmable gate array (FPGA) or another Programmable Logic Unit (PLU), a separate port or transistor, separate hardware components, or a combination thereof, to perform the functions described in the text. A processor can also be implemented as a combination of computer equipment, for example a combination of DSP and a microprocessor in combination with a DSP core, or any other such configuration.

The processor can be linked, via one or more buses, to read information from, or write to, the memory. The processor may additionally, or as another possibility, contain memory, for example processor registers. The memory may contain a processor cache, including a multi-level hierarchical cache in which different levels exhibit different capabilities and different access speeds. This memory may further contain random access read/write memory (RAM), as well as other devices with a volatile memory or devices with a non-volatile memory. The data storage may consist of hard drives, optical discs such as compact discs (CDs) or digital video discs (DVDs), flash memory, floppy disks, magnetic tape, and Zip drives.

The processor can also be coupled to an input device and an output device to get input from, and provide output to, a user of the computer, respectively. Suitable input devices include, but are not limited to, a keyboard, buttons, keys, switches, pointing devices, a mouse, a joystick, a remote control device, an infrared detector, a voice recognition system, an identification code reader, a scanner, a video camera (possibly coupled with image processing software to, for example, detect hand or facial movements), a motion detector, a microphone (possibly linked to sound processing software to, for example, detect voice commands). Suitable output devices include, but are not limited to, visual output devices, including displays and printers, audio output devices, including speakers, headphones, earphones and alarms, additive manufacturing devices, and haptic output devices.

The processor can further be coupled to a network interface card. The network interface card prepares data generated by the processor for transmission over a network in accordance with one or more data transmission protocols. The network interface card also decodes data received over a network in accordance with one or more data transmission protocols. The network interface card may contain a transmitter, a receiver or both a transmitter and a receiver. In other embodiments, the transmitter and receiver may be two different components. The network interface card can be carried out in the form of a universal processor or a digital signal processor (DSP), an application-specific integrated circuit (ASIC), a field-programmable gate array (FPGA) or another Programmable Logic Unit (PLU), a separate port or transistor, separate hardware components, or a combination thereof, to perform the functions described in this text.

Fig. 2 illustrates an isometric view of a tool holder 4 and tool-setting device 3 comprising a measuring system 6, wherein the measuring system 6 defines a measuring zone wherein a width of the machining end 5 of the tool 1 can be measured. The system contains the elements shown in Figure 1. The measuring system 6 shown in Figure 2 is a laser measuring system 6 containing a single laser beam 19. Consequently, on the basis of a preferred embodiment of the invention, at least a part of the tool tip must be moved towards the laser beam 19 so that, due to the interruption of the laser beam 19, at least a part of the machining end of the tool 1 can be detected in the measuring zone of the measuring system 6.

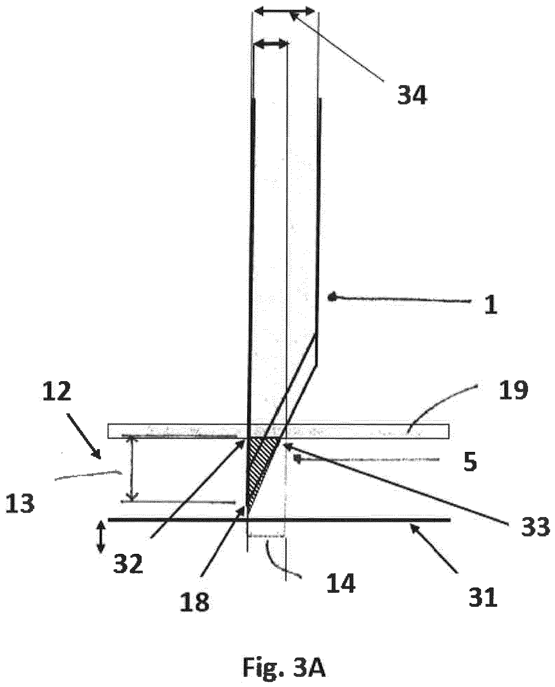

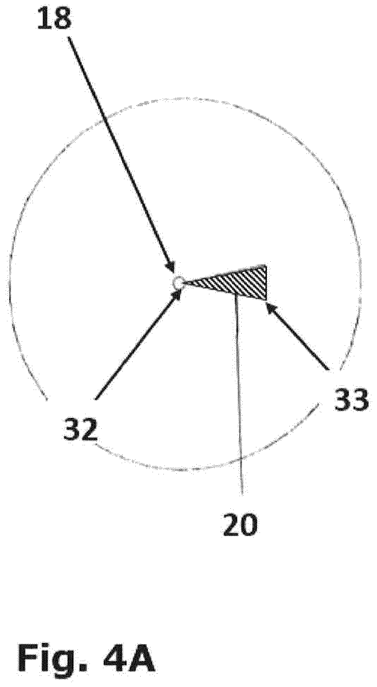

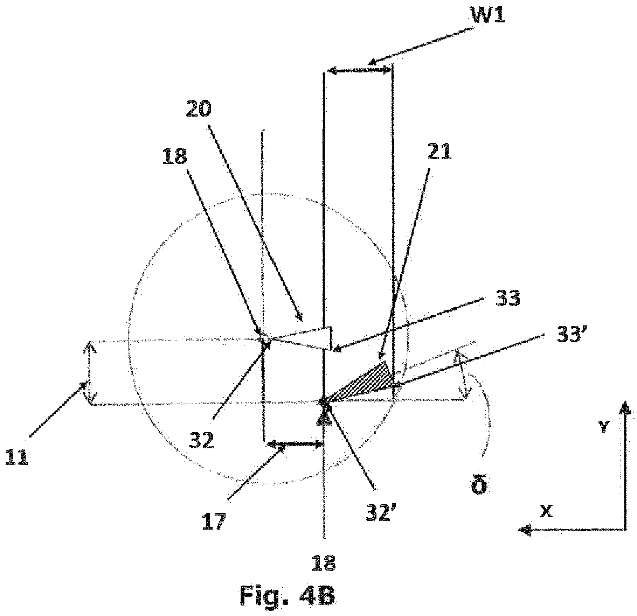

Fig. 3A illustrates a schematic representation of a vertical cross-section of at least a part of the tool 1, i.e. a predetermined part of the machining end 5 of the tool 1 in the measuring zone of the measuring system 6. In fig. 3A, according to a preferred embodiment of the invention, the measuring system 6 is a laser measuring system. The height of the laser beam 12 is the height at which the width of the predetermined part of the machining end of the tool 1 is measured. Figure 3A also distinguishes between the machining end depth (MD) 13 and the machining end length (ML) 14. The width of the predetermined part of the machining end of the tool 1 in the measuring zone can be schematically illustrated on the basis of the top view in Fig.4A and Fig.4B of the tool 1 at the height of the machining end depth. The width of the tool 1 in the measuring zone (W) can also be mathematically expressed in function of the angular deviation $\delta$, i.e.

$$W = (ML \times \sin\delta)+(MB \times \cos\delta)$$

wherein MB is the width of the machining end 30, which formula applies in the circumstance in which $\alpha 01$ is equal to $\alpha 12$. If $\alpha 01$ differs from $\alpha 12$, the angular deviation $\delta$ of the tool 1 with respect to an optimum machining direction according to a desired angular deviation accuracy on the basis of a determined first width W1 and a determined second width W2, may be obtained as

$$\delta = \tan^{-1}((W2 \times \sin\alpha 01 - W1 \times \sin\alpha 12) / (W1 \times \cos\alpha 12 - W2 \times \cos\alpha 01)).$$

According to a preferred embodiment of the invention wherein $\alpha01$ equals $\alpha12$, the angular deviation $\delta$ of the tool 1 with respect to an optimum machining direction according to a desired angular deviation accuracy on the basis of a determined first width W1 and a determined second width W2, may be obtained as

$$\delta = \tan-1(\tan \alpha01 \times (W2+W1/W1-W2))$$

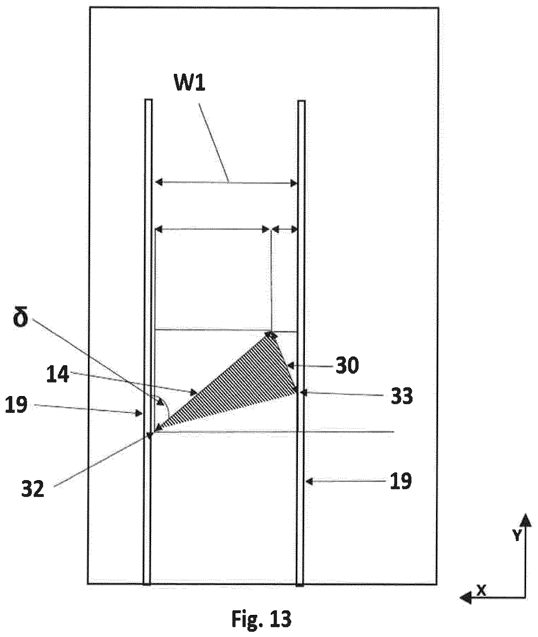

The meaning of width of the tool 1 in the measuring zone (W) is also exemplified in Figure 13. It should be noted that a precise setting of the tool tip in the measuring zone, and thus the determination of a machining end length (ML) 14, can have an important influence on the determination of a width of the tool 1 in the measuring zone (W). If no machining end depth (MD) can be determined by the processing unit, no machining end length (ML) 14 can be determined either and the width of the tool 1 in the measuring zone cannot be determined either.

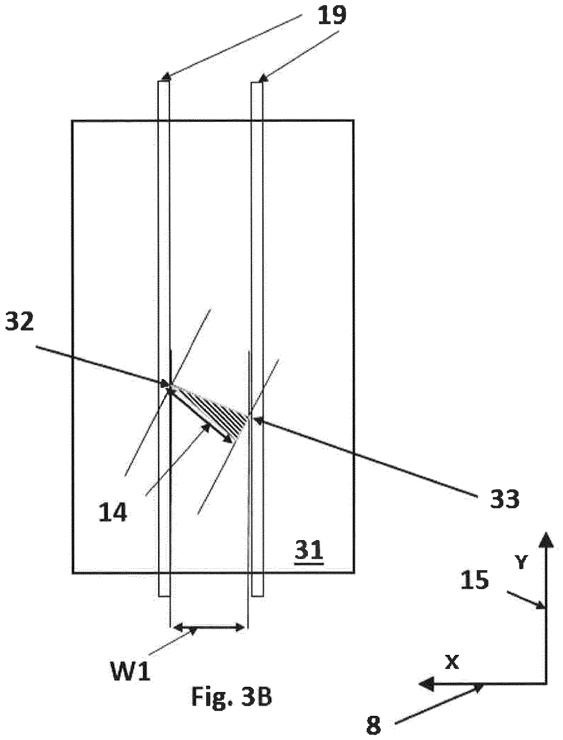

Fig. 3B is a schematic representation of a top view of the tool 1 and the machining end represented in Fig. 3A, wherein a single laser beam 19, which beam is perpendicular to the lateral direction 8, is shown in two different positions, the first position being right to the machining end 5 and of the second outer edge 33, and the second position being left to the machining end 5 and left to the first outer edge 32. In Fig. 3B, the laser beam is moved from right to left, along the lateral direction 8. When the laser beam 19 is moved along the lateral direction 8, from right to left, it is interrupted when it hits the second outer edge 33, if the laser beam is moved still from right to left, the laser beam does not hits the machining end 5 until the laser beam 19 passes the first outer edge 32. The width of the tool 1 in the measuring zone is then measured as a distance between the first outer edge 32 and the second outer edge 33

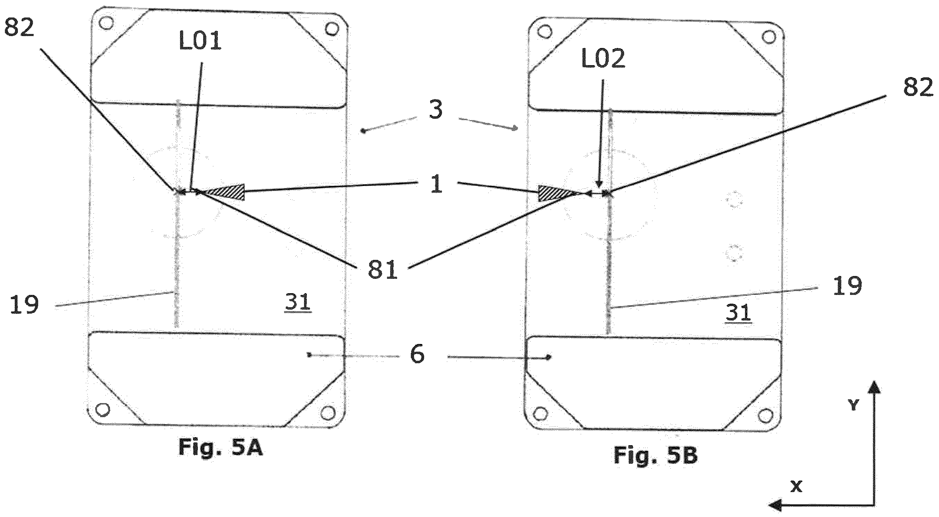

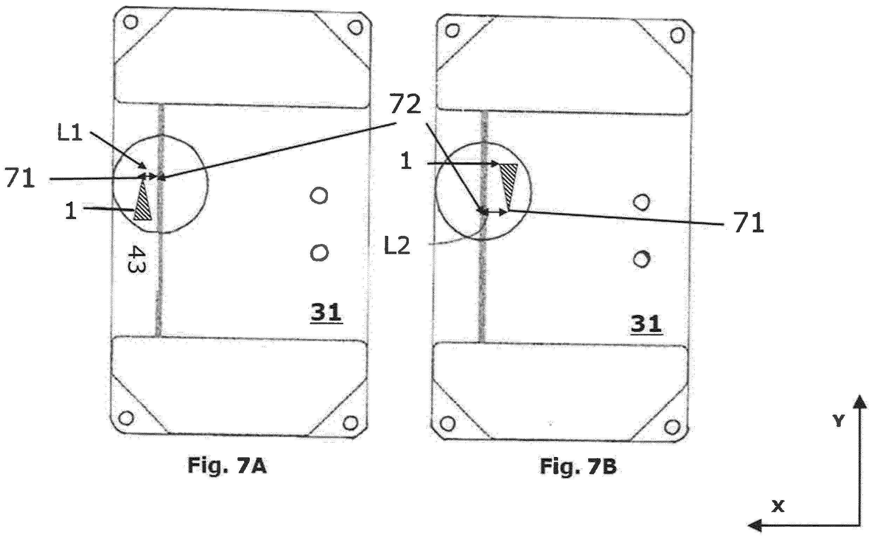

Fig. 4A, 4B to 7 show a schematic representation of a top view of a horizontal cross-section of tools, which supports a description of the methods according to at least one preferred embodiment of the invention. Figure 4A shows the machining end 5 of the tool 1, which tool 1 is in its initial position 20. The tool in its initial position 20 comprises a tip 18, and a first outer edge 32 and a second outer edge 33. Figure 4B illustrates how a tool in its rotated position 21, which is the tool in its initial position after being displaced over the supporting surface of the measuring system 31, compares to the tool in its initial position 20. The spatial position of the outer edges 32 and 33 changes with respect to the lateral direction and the longitudinal direction, after the tool in its initial position is displaced (rotated by an angular deviation $\delta$ and moved), which new position for the outer edges 32 and 33 is 32' and 33'. In Fig. 4B, the angular deviation $\delta$, lateral deviation 17 and longitudinal deviation 11 are shown. Described below is a method according to a preferred embodiment of the invention for calibrating a tool 1 of a cutting plotter. The method comprises determining an angular deviation $\delta$ of the tool 1 with respect to an optimum machining direction according to a desired angular deviation accuracy, wherein the tool 1 comprises a machining end extending between a first outer edge and a second outer edge, wherein the angular deviation $\delta$ is determined by means of a tool-setting device 3 and a tool holder 4 which are linked with a processing unit. The method comprises the introduction, by means of a motorised displacement of the tool holder 4, of at least a part of a machining end 5 of the tool 1 into a measuring zone of a measuring system 6 of the tool-setting device 3, wherein the tool 1 is in contact with the tool holder 4. As soon as at least a part of the tool 1 has been detected in the measuring zone, it is possible to proceed to setting, by means of a further motorised displacement of the tool holder 4, a predetermined machining position of the machining end 5 of the tool 1 in the measuring zone of the measuring system 6. The motorised displacements of the tool holder 4 can be controlled by the processing unit. After the tool holder has been brought to a predetermined machining position, the processing unit can proceed to determine the first width W1 of the tool 1 in the measuring zone of the measuring system 6. The first width W1 can be stored in the memory of the processing unit. The processing unit then controls the tool holder 4 for carrying out a motorised rotation, of the tool holder 4 around a tool holder rotational axis 45 through a first angle of rotation $\alpha12$ on the basis of the desired angular deviation accuracy, the first angle of rotation $\alpha12$ being in the range of -90° to +90° and different from 0°, and wherein the tool holder rotational axis 45 of the tool holder 4 is substantially perpendicular to the measuring zone of the measuring system 6. After the tool holder 4 has been rotated, the width of the tool 1 in the measuring zone will also change with respect to the initial starting position. Consequently, a second width W2 of the tool 1 in the measuring zone of the measuring system 6 can be determined by the processing unit. It should be noted that the second width W2 of the tool 1 is measured in the same plane, which is substantially parallel to the measuring zone, in comparison with the first width W1. After a first width W1 and a second width W2 have been determined and stored in the memory of the processing unit, the processing unit can determine an angular deviation $\delta$ with respect to the optimum machining direction according to the desired angular deviation accuracy.

For example, if the angular deviation $\delta$ to be determined is +5°, the tool holder 4 can be controlled to perform a rotation around the tool holder rotational axis 45 through a first angle of rotation of $\alpha12 = -5°$, whereby the determined second width is minimal and the angular deviation $\delta$ is +5°. If the first angle of rotation $\alpha12 = +5°$, the determined second width W2 is greater than the determined first width W1 and, according to a preferred embodiment of the invention, it is possible to repeat the above-mentioned steps again until the determined second width is minimal.

In a particular embodiment of the invention, a method for calibrating tools is provided for, wherein when determining the angular deviation δ, it is first possible to rotate the tool holder 4 around the tool holder rotational axis 45, through a predetermined first initial angle of rotation α01 before determining, by means of the processing unit, the first width W1 of the tool 1 in the measuring zone of the measuring system 6. The predetermined first angle of rotation α12 should approximate the relation wherein |α01| < α12 < (90°+ |α01|) for -90° < α01 < 0° or a relationship (-90°-α01) < α12 < - α01 for 0° < α01 < 90°. The angular deviation δ can in this case be derived as

$$\delta= \tan^{-1}(\tan(\alpha 01)\times(W1+W2)/(W1-W2))$$

wherein W1 is the determined first width of the tool 1 in the measuring zone, and wherein W2 is the determined second width of the tool 1 in the measuring zone. This embodiment allows determining an angular deviation δ of the tool 1 in the measuring zone irrespective of the relationship between the machining end width 30 (MB) and machining end length (ML). For example, if the first initial angle of rotation α01 is +20°, the first angle of rotation α12 should be smaller than -20°, preferably substantially equal to -40°. The first angle of rotation is then measured with respect to the angular position of the tool holder 4 after it has already undergone a turn or rotation under the first initial angle of rotation. In other words, the tool 1 is first rotated through a first initial angle of rotation α01, starting from the position in which the tool 1 contains an angular deviation δ, for example +10°. The tool holder 4 is now in an angular position which has a dimension with respect to the calibrated starting position without angular deviation δ of δ +10°. After the angular displacement has been carried out, a first width W1 of the tool 1 is determined in the measuring zone. The tool holder 4 is then rotated through a first angle of rotation α12, the direction of the rotation always having to be opposite to the direction of the rotation of the first initial angle of rotation α01. In this example, the first angle of rotation α12 should be at least -10°, starting from the last position in which the first width W1 was determined. After carrying out the rotation over a first angle of rotation α12 of at least -10°, the second width W2 of the tool 1 is determined in the measuring zone. On the basis of the first width W1 and the second width W2, as well as the first initial angle of rotation α01, the angular deviation δ can be determined. According to a preferred embodiment of the invention, the step of rotating, by means of a motorised rotation of the tool holder rotational axis 45, the predetermined part of the machining end 5 of the tool 1 over a predetermined first initial angle of rotation α01, is in accordance with (2|α01| - 1°) ≤ α12 ≤ (2|α01| + 1°), in particular (2|α01| - 0.5 °) ≤ α12 ≤ (2|α01| + 0.5°), preferably (2|α01| - 0.1°) ≤ α12 ≤ (2|α01| + 0.1°), even more preferably 2|α01| = α12 for-90° < α01 < 0°, or a relationship (2(α01) - 1°) ≤ - α12 ≤ (2(α01) + 1°), in particular (2(α01) - 0.5 °) ≤ - α12 ≤ (2(α01) + 0.5°), preferably (2(α01) - 0.1°) ≤ - α12 ≤ (2(α01) + 0.1°), even more preferably 2(α01) = - α12 for 0° < α01 < 90°.

In order to determine the angular deviation δ even more accurately, the invention provides for a preferred embodiment in which the tool holder 4 is first rotated under the determined angular deviation δ according to the previous embodiment, in order to thereafter repeat the steps but where a second initial angle of rotation α23 is preferably smaller than the first initial angle of rotation α01. As a result, the angular deviation δ can be determined starting from an angular position of the tool holder 4 with an angular deviation δ very close to around 0°. This embodiment is preferred for very thin and sharp tools. By starting with an angular deviation δ of substantially 0°, the factor MB x cos(δ) will not differ much, for both measurements of the width, from the third width W3 and fourth width W4 of the tool 1 in the measuring zone, respectively.

In order to determine the angular deviation δ more and more accurately, it is also possible to perform the aforementioned steps, i.e. rotating, determining W1, rotating, and determining W2, repeatedly, but wherein the magnitude of the angles of rotation is reduced stepwise, for example in steps of 1°, preferably in steps of 0.5°, even more preferably in steps of 0.1°.

According to a particular embodiment of the invention, the angular deviation δ can also be determined by iteratively repeating the steps of determining, by means of the processing unit, a first width W1 of the tool 1 in the measuring zone of the measuring system 6, rotating, by means of a motorised rotation, of the tool holder 4 around a tool holder rotational axis 45 through a first angle of rotation α12 on the basis of the desired angular deviation accuracy, the first angle of rotation α12 being in the range of -90° to +90° and different from 0°, wherein the tool holder rotational axis 45 of the tool holder 4 is substantially perpendicular to the measuring zone of the measuring system 6, and determining, by means of the processing unit, a second width W2 of the tool 1 in the measuring zone of the measuring system 6. When performing these steps iteratively, or more specifically, performing these steps at least twice, the angular deviation δ of the tool 1 can be determined. More specifically, if the determined width is minimal, this provides a determination of the angular deviation δ of the tool 1. When repeatedly performing the previous steps, the angle of rotation can also be reduced in order to determine the angular deviation δ more accurately.

If a 1-beam sensor is used to measure, the following parameters are also important

- The speed with which the tool 1 moves in the longitudinal direction, because the processor that processes the measurements has a certain delay. The slower the more accurate the measurement.
- The distance travelled can also be a parameter, this may depend on the type of tool 1 and the starting angle, the shortest possible distance covered will ensure a faster measurement. In measurement 2, for example, the distance travelled can be reduced because it is known that alpha is already close to 0.

- The sensitivity (GS) of the sensor. With a beam sensor the sensor will give a value between 0 and 100, this is because the receiver receives an amount of light with a diameter DO, if there is nothing in the way of the sensor, we get a value equal to 100, if the receiver no longer receives light, we get a value equal to 0. Since a tool can be very fine, it is possible that the sensor is never completely covered, which is why it is necessary to set a sensitivity, e.g. from 20% of the sensor covered it is assumed that the tool is in front of the sensor.
- With a 1-beam sensor, the sensor itself has a certain measurement span (LMB), which depends on DO and the set sensitivity. W is therefore actually LMB + ML * sin(alpha) + MB * cos(alpha)
- When using a CCD camera it is important to have a high resolution, or the camera must be used in combination with a Y-movement like with a 1-beam sensor in order to be able to measure with a larger resolution.
- The tools are provided with an identification code, which means that the device knows what type of tool is in the device, so it is possible to find the best parameters depending on the type of tool, the results of many measurements are reflected in the table below.
- Some tools are driven by an extra motor, this e.g. to have an oscillating movement (saw movement) or a rotating movement with a round tool ("pizza cutter").
- Some tools cut at an angle, often 45 degrees instead of an upright cut, this serves to score material. These tools are called "V-cut" blades.
- Not only blades are measured but also scoring tools, these are tools to make an indentation in e.g. cardboard, to be able to fold cardboard easily.

According to an embodiment of the present invention, the laser beam measuring system allows for a predetermined measuring speed in the range of 10 mm/s - 250 mm/s, preferably 25 mm/s - 250 mm/s, even more preferably 50 mm/s - 250 mm/s.

Table with some measurement results. The purpose of all these measurements is also to find parameters that exist for all tool 1 types so that new tool 1 types can also be measured in the future without adjusting the measuring methods or parameters:

| Tool type | Machining end depth MD-range | Sensitivity beam sensor (GS) | Angle beta for double measurement | Measuring speed with laser beam sensor | Measuring method with best result | First Travelled distance in longitudinal direction | Control of tool for oscillation or rotation |
|---|---|---|---|---|---|---|---|
| Kiss cutting knife | 1.5-2.8 mm | 40-60% | 10-35 | 50-250 mm/s | 6+7 | Min 10 mm | n/a |
| Cut out knife | 1.5-2.8 mm | 40-60% | 10-35 | 50-250 mm/s | 6+7 | Min 10 mm | n/a |
| Scoring tool | 1.5-2.8 mm | 40-60% | 10-35 | 50-250 mm/s | 3 | Min 10 mm | n/a |
| V cut blade | 1.5-2.8 mm | 40-60% | 20-25 | 50-250 mm/s | 3 | Min 10 mm | n/a |
| Oscillating blade | 1.5-2.8 mm | 40-60% | 10-35 | 50-250 mm/s | 6+7 | Min 10 mm | Do not control when measuring |
| Rotating blade | 1.5-2.8 mm | 40-60% | 10-35 | 50-250 mm/s | 7 | Min 10 mm | Control when measuring |

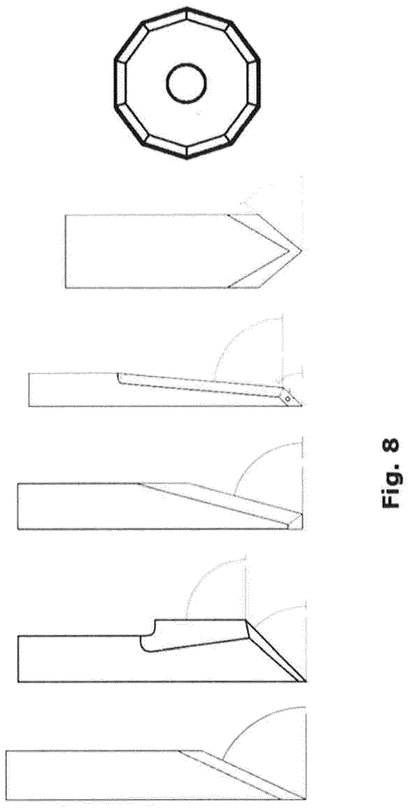

Fig. 8 shows different tool types. The tools that can be used according to the present invention can be cutting tools or creasing tools, or scoring tools.

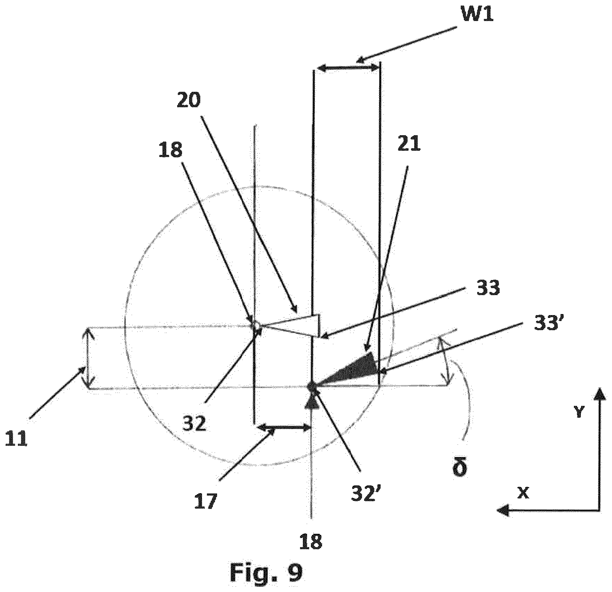

Fig. 9 further clarifies the meaning of width of the predetermined part of the machining end of the tool 1 in the measuring zone, which can be W1, W2, W3 or W4. In Figure 9, the same tool 1 is shown positioned with a different orientation respect to the lateral direction 8 (which identifies the X Cartesian coordinate).

The invention also provides for a method for determining the lateral deviation 17 of the tool 1 in the measuring zone of the measuring system 6. To do this, the tool 1 must be calibrated first on the basis of the determined angular deviation δ, i.e. the tool holder 4 must be rotated, by means of a motorised rotation, of the tool holder 4 around the tool holder rotational axis 45 based on the determined angular deviation δ of the tool 1 with respect to an optimum machining direction. To determine the lateral deviation 17, a first lateral distance L1 between a lateral tool reference point 71 on the predetermined part of the machining end 5 of the tool 1 and a lateral reference point 72 in the measuring zone of the measuring system 6 is measured. Next, the tool holder 4 is rotated further, by means of a further motorised rotation around the tool holder rotational axis 45 over a lateral calibration angle of 180°. Thereafter, a second lateral distance L2 is measured between the lateral tool reference point 71 on the predetermined part of the machining end 5 of the tool 1 and the lateral reference point 72 in the measuring zone of the measuring system 6. On the basis of L1 and L2, the lateral deviation 17 can then be determined according to the relation (L1-L2)/2.

Other methods for determining the lateral deviation 17 comprise the steps wherein the tool 1 is first corrected for the angular deviation δ. After this, the machining end width (MB) is measured and the lateral deviation 17 can be determined according to the relation (L1-L2) / 2 - MB.

A particular embodiment of the invention also provides for determining the longitudinal deviation 11 of the tool 1 in a plane substantially parallel to the measuring zone of the measuring system 6 of the tool-setting device 3, the method comprising rotating, by means of a motorised rotation of the tool holder rotational axis 45, the predetermined part of the machining end 5 of the tool 1 over the determined angular deviation δ of the tool 1 with respect to an optimum machining direction. This is followed by rotating, by means of a motorised rotation of the tool holder rotational axis 45, the predetermined part of the machining end 5 of the tool 1 over an angle of 90°. This is followed by measuring a first longitudinal distance L01 between the longitudinal tool reference point 81 on the predetermined part of the machining end 5 of the tool 1 and a longitudinal reference point 82 in the measuring zone of the measuring system 6. This step is followed by rotating, rotating, by means of a motorised rotation of the tool holder rotational axis 45, the predetermined part of the machining end 5 of the tool 1 over an angle of 180°. Before proceeding to determining the longitudinal deviation 11, measurement takes place of a second longitudinal distance L02 between the longitudinal tool reference point 81 on the predetermined part of the machining end 5 of the tool 1 and the longitudinal reference point 82 in the measuring zone. And finally, determining, by means of the processing unit, the longitudinal deviation 11 of the tool 1 in a plane substantially parallel to the measuring zone of the measuring system 6 of the tool-setting device 3 on the basis of the first longitudinal distance L01 and the second longitudinal distance L02 and the relationship longitudinal deviation 11 equals to (L01+L02)/2.

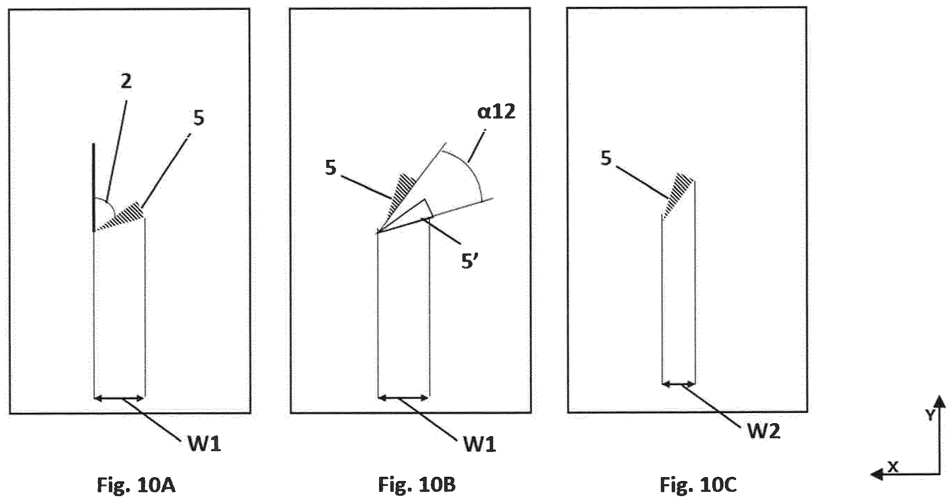

Fig.10A, FIG.10B and FIG.10C illustrate a method for calibrating a tool 1 of a cutting plotter according to a preferred embodiment of the invention. In particular, Fig.10A, FIG.10B and FIG.10C illustrate the steps for determining an angular deviation δ of the tool 1 with respect to an optimum machining direction according to a desired angular deviation accuracy, wherein the tool 1 comprises a machining end 5 extending between a first outer edge 32 and a second outer edge 33 along a lateral direction 8 (X-direction), wherein the angular deviation δ is determined by means of a tool-setting device 3 and a tool holder 4 which are linked with a processing unit according to a previous described preferred embodiment of the invention. Fig.10A illustrates a top view of a horizontal cross-section of at least a part of the machining end 5 of the tool 1 in the measuring zone of the measuring system 6. According to a step of a preferred embodiment of the invention, a first width W1 of the tool 1 in the measuring zone of the measuring system may be determined by means of the processing unit (not illustrated). The first width W1 equals the distance from the first outer edge 32 to the second outer edge 33 measured along the lateral direction 8 (X-direction) of the machining end 5 of the tool 1 in the measuring zone of the measuring system 6. The first width W1 is the width measured along the lateral direction 8 (X-direction) of the machining end 5 of the tool 1 at a predetermined height above a supporting surface 31 of the measuring system 6, wherein the supporting surface 31 is substantially extending in the lateral direction (X-direction) and longitudinal direction (Y-direction). In a preferred embodiment of the invention, the predetermined height may equal to the height of a laser 12 beam extending in the longitudinal direction (Y-direction).

Fig.10B may illustrate the result of a following step wherein the tool holder 4 is rotated around a tool holder rotational axis 45 through a predetermined first angle of rotation α12 on the basis of the desired angular deviation accuracy. The predetermined first angle of rotation α12 may be in the range of -90° to +90° and different from 0°. The tool holder rotational axis 45 of the tool holder 4 is substantially perpendicular to the measuring zone of the measuring system 6. Skilled people in the art may notice that by rotating the tool holder 4, the initial orientation of the machining end 5' of the tool 1 may change to a new orientation 5, hence the first width W1 may change. Therefore, the method comprises a further step to determine, by means of a processing unit, a second width W2 of the tool 1 in the measuring zone of the measuring system, wherein this second width W2 is illustrated in Fig.10C. The second width W2 equals the distance from the first outer edge 32 to the second outer edge 33 measured along the lateral direction 8 (X-direction) of the machining end 5 of the tool 1 in the measuring zone of the measuring system 6 after the rotation through first angle of rotation α12 is applied. The angular deviation δ of the tool 1 can be determined with respect to an optimum machining direction according to a desired angular deviation accuracy on the basis of the determined first width W1 and the determined second width W2.

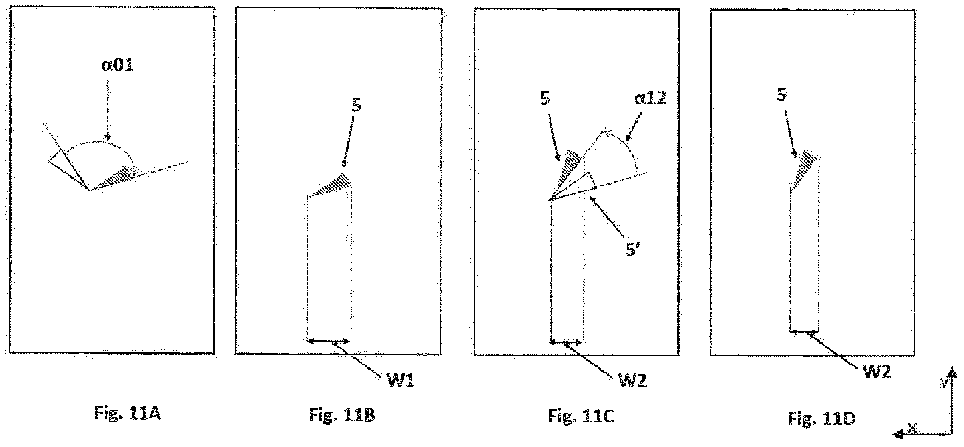

Fig.11A, Fig.11B, Fig.11C and Fig.11D are illustrating the results of a method according to a preferred embodiment of the invention. Similar to Fig.10A - Fig.10C, Fig.11A - Fig.11D depict a top view of a horizontal cross-section of at least a part of the machining end 5 of the tool 1 in the measuring zone of the measuring system 6. According to this preferred embodiment, a step of rotating, by means of an initial motorised rotation of the tool holder 4 around the tool holder rotational axis 45, through a predetermined first initial angle of rotation $\alpha01$, has been executed before performing a step of determining, by means of the processing unit, a first width W1 of the tool 1 in the measuring zone of the measuring system 6. This first step is illustrated in Fig.11A. The first angle of rotation $\alpha12$ can be determined according to $|\alpha01| < -\alpha12 < 90°+|\alpha01|$. Fig.11B may illustrate the result of a following step wherein the tool holder 4 is rotated around a tool holder rotational axis 45 through a first angle of rotation $\alpha12$ on the basis of the desired angular deviation accuracy. The first angle of rotation $\alpha12$ may be in the range of -90° to +90° and different from 0°. The tool holder rotational axis 45 of the tool holder 4 is substantially perpendicular to the measuring zone of the measuring system 6. Skilled people in the art may notice that by rotating the tool holder 4, hence the machining 5 of the tool 1, the first width W1 may change. Therefore, the method comprises a further step to determine, by means of a processing unit, a second width 16 of the tool 1 in the measuring zone of the measuring system, wherein this second width 16 is illustrated in Fig.11C and Fig. 11D.

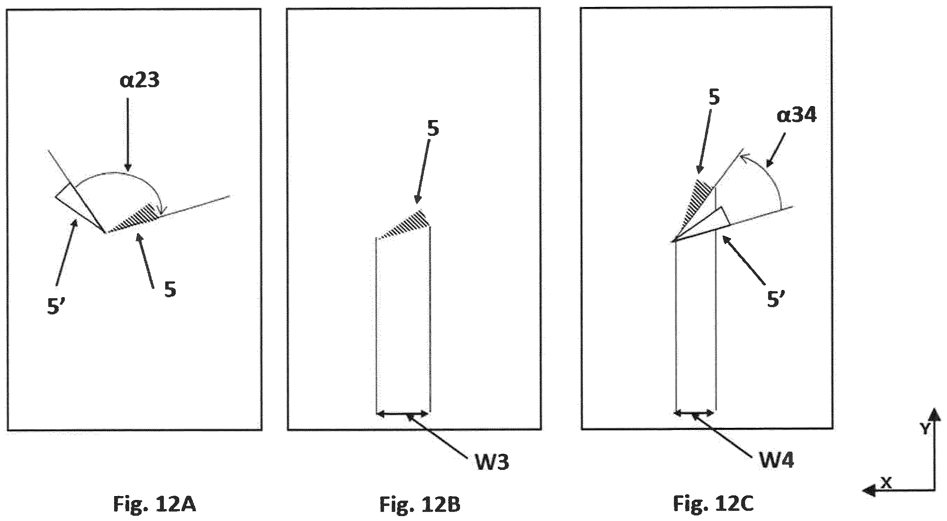

Fig.12A, Fig.12B and Fig.12C illustrate the steps according to a preferred embodiment of the invention, wherein the tool holder 4 is rotated, by means of a motorised rotation, around the tool holder rotational axis 45 on the basis of an already determined angular deviation $\delta$ of the tool 1, determined by the steps as illustrated in Fig.10A-Fig.10C or Fig.11A-Fig.11D. Following this rotation, and as demonstrated in Fig.12A, the tool holder 4 is further rotated through a predetermined second initial angle of rotation $\alpha23$, wherein the second initial angle of rotation $\alpha23$ is preferably smaller than the first initial angle of rotation $\alpha01$. Thereafter, and as illustrated in Fig.12B, a third width W3 of the tool 1 in the measuring zone of the measuring system 6 may be measured, by means of the processing unit. The third width W3 equals the distance from the first outer edge 32 to the second outer edge 33 measured along the lateral direction 8 (X-direction) of the machining end 5 of the tool 1 in the measuring zone of the measuring system 6. In a following step, and as illustrated in Fig.12C, a rotation of the tool holder 4 around the tool holder rotational axis 45 through a predetermined second angle of rotation $\alpha34$ may be performed. The predetermined second angle of rotation $\alpha34$ is determined according to a relationship $|\alpha23| < \alpha34 < (90°+ |\alpha23|)$ for $-90° < \alpha23 < 0°$ or a relationship $(-90°- \alpha23) < \alpha34 < -\alpha23$ for $0° < \alpha23 < 90°$. In next steps, a fourth width W4 of the tool 1 in the measuring zone of the measuring system 6 is measured, wherein the fourth width W4 equals the distance from the first outer edge 32 to the second outer edge 33 measured along the lateral direction 8 (X-direction) of the machining end 5 of the tool 1 in the measuring zone of the measuring system 6. According to a preferred embodiment of the present invention, the predetermined second angle of rotation $\alpha34$ is determined according to $(2|\alpha23| - 1°) \le \alpha34 \le (2|\alpha23| + 1°)$, in particular $(2|\alpha23| - 0.5°) \le -\alpha34 \le (2|\alpha23| + 0.5°)$, preferably $(2|\alpha23| - 0.1°) \le -\alpha34 \le (2|\alpha23| + 0.1°)$, even more preferably wherein $2|\alpha23| = -\alpha34$ for $-90° < \alpha23 < 0°$, or a relationship $(2(\alpha23) - 1°) \le -\alpha34 \le (2(\alpha23) + 1°)$, in particular $(2(\alpha23) - 0.5°) \le -\alpha34 \le (2(\alpha23) + 0.5°)$, preferably $(2(\alpha23) - 0.1°) \le -\alpha34 \le (2(\alpha23) + 0.1°)$, even more preferably $2(\alpha23) = -\alpha34$ for $0° < \alpha23 < 90°$.

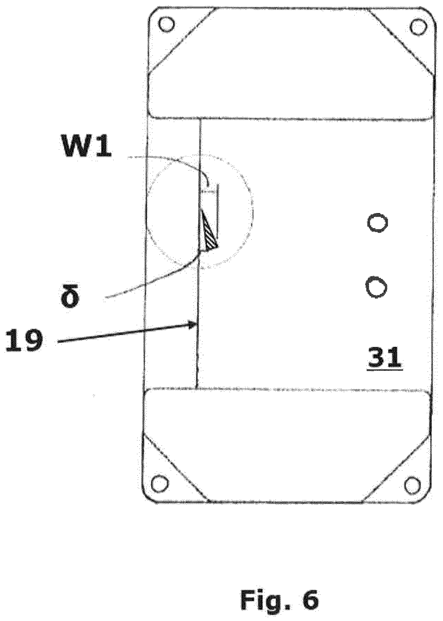

Fig. 13 illustrates how the width of the tool 1 in the measuring zone W1 of the machining end 5 of the tool 1 can be calculated based on the angular deviation $\delta$, the machining end length 14 and the actual width of the tool 30, based on the use of trigonometric functions part of the common knowledge. Fig. 13 illustrates a top view of the machining end of the tool 1, which is disposed over the supporting surface of the measuring system 31. In this circumstance, the angular deviation $\delta$ is determined with respect to an optimum machining direction, which for the illustration in Fig. 13, is the lateral direction 8 (X-direction), as in Fig. 4B, and Fig. 9. In Fig. 6, the optimum machining direction is the longitudinal direction 15 (Y-direction).

According to a preferred embodiment of the invention, a computer readable medium with stored thereon the computer program comprising the steps for calibrating a tool of a cutting plotter according to at least one of the aforementioned preferred embodiments is provided.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

Legend:

tool 1
angular deviation $\delta$
tool-setting device 3
tool holder 4

machining end 5
measuring system 6
first width W1
lateral direction (X-direction) 8
first lateral distance L1
second lateral distance L2
longitudinal deviation 11
height of the laser beam 12
machining end depth MD 13
machining end length ML 14
longitudinal direction (Y-direction) 15
second width W2
lateral deviation 17
tool tip 18
laser beam 19
tool in the initial position 20
tool in the rotated position 21
third width W3
fourth width W4
first longitudinal distance L01
second longitudinal distance L02
first angle of rotation $\alpha 12$
second angle of rotation $\alpha 34$
first initial angle of rotation $\alpha 01$
second initial angle of rotation $\alpha 23$
machining end width MB 30
supporting surface of the measuring system 31
first outer edge of the machining end 32
second outer edge of the machining end 33
tool length 34
tool holder rotational axis 45
lateral tool reference point 71
lateral reference point 72
longitudinal tool reference point 81
longitudinal reference point 82


**Claims**

1.  A method for calibrating a tool (1) of a cutting plotter, wherein the tool (1) is in contact with a tool holder (4) which is connected to a processing unit, the tool (1) comprises a machining end (5) extending between a first outer edge (32) and a second outer edge (33) along a lateral direction (8) (X-direction), **characterized in that** the method comprises the steps of:

    h1. introducing, by means of a motorised displacement of the tool holder (4), a predetermined part of the machining end (5) of the tool (1) to a first initial position into a measuring zone of a measuring system (6) of a tool-setting device (3), wherein the tool-setting device (3) is connect to the processing unit;
    h2. determining, by means of the measuring system (6), a first width W1 of the tool (1) in the measuring zone of the measuring system, wherein the first width W1 equals the distance measured along the lateral direction (8) (X-direction) between the first outer edge (32) and the second outer edge (33) of the predetermined part of the machining end (5) of the tool (1);
    h3. rotating, by means of a motorised rotation of a tool holder rotational axis (45), the predetermined part of the machining end (5) of the tool (1) over a predetermined first angle of rotation $\alpha 12$, wherein the first angle of rotation $\alpha 12$ is in the range of -90° to +90° with respect to the first initial position and different from 0°, and wherein the tool holder rotational axis (45) is substantially perpendicular to the measuring zone of the measuring system (6);
    h5. determining, by means of the measuring system (6), a second width W2 of the tool (1) in the measuring zone of the measuring system, wherein the second width W2 equals the distance measured along the lateral direction (8) (X-direction) between the first outer edge (32) and the second outer edge (33) of the rotated predetermined part of the machining end (5) of the tool (1);

h6. determining, by means of the processing unit, an angular deviation $\delta$ of the tool (1) with respect to an optimum machining direction according to a desired angular deviation accuracy on the basis of the determined first width W1 and the determined second width W2.

2. The method according to claim 1, wherein, prior to determining first width W1 of the tool (1) in the measuring zone of the measuring system, comprising a step of rotating, by means of a motorised rotation of the tool holder rotational axis (45), the predetermined part of the machining end (5) of the tool (1) over a predetermined first initial angle of rotation $\alpha01$, wherein the predetermined first initial angle of rotation $\alpha01$ is in the range -90° to 90° with respect to the first initial position and different from 0°, wherein the first angle of rotation $\alpha12$ follows a relationship $|\alpha01| < \alpha12 < (90°+ |\alpha01|)$ for $-90° < \alpha01 < 0°$ or a relationship $(-90°- \alpha01) < \alpha12 < - \alpha01$ for $0° < \alpha01 < 90°$.

3. The method according to claim 2, wherein the first angle of rotation $\alpha12$ follows a relationship $(2|\alpha01| - 1°) \leq \alpha12 \leq (2|\alpha01| + 1°)$, in particular $(2|\alpha01| - 0.5°) \leq \alpha12 \leq (2|\alpha01| + 0.5°)$, preferably $(2|\alpha01| - 0.1°) \leq \alpha12 \leq (2|\alpha01| + 0.1°)$, even more preferably $2|\alpha01| = \alpha12$ for $-90° < \alpha01 < 0°$, or a relationship $(2(\alpha01) - 1°) \leq - \alpha12 \leq (2(\alpha01) + 1°)$, in particular $(2(\alpha01) - 0.5°) \leq - \alpha12 \leq (2(\alpha01) + 0.5°)$, preferably $(2(\alpha01) - 0.1°) \leq - \alpha12 \leq (2(\alpha01) + 0.1°)$, even more preferably $2(\alpha01) = - \alpha12$ for $0° < \alpha01 < 90°$.

4. The method according to any of the previous claims 2 or 3, wherein the method further comprising the steps of:

h7. rotating, by means of a motorised rotation of the tool holder rotational axis (45), the predetermined part of the machining end (5) of the tool (1) from the first initial position over the determined angular deviation $\delta$ of the tool (1) into a second initial position;

h8. rotating further, by means of a motorised rotation of the tool holder rotational axis (45), the predetermined part of the machining end (5) of the tool (1) over a predetermined second initial angle of rotation $\alpha23$, wherein $\alpha23$ is in the range -90° to 90° with respect to the second initial position and different from 0°;

h9. determining, by means of the measuring system (6), a third width W3 of the tool (1) in the measuring zone of the measuring system, wherein the third width W3 equals the distance measured along the lateral direction (8) (X-direction) between the first outer edge (32) and the second outer edge (33) of the further rotated predetermined part of the machining end (5) of the tool (1);

h10. rotating further, by means of a motorised rotation of the tool holder rotational axis (45), the rotated predetermined part of the machining end (5) of the tool (1) over a predetermined second angle of rotation $\alpha34$, wherein the second angle of rotation $\alpha34$ follows a relationship $|\alpha23| < \alpha34 < (90°+ |\alpha23|)$ for $-90° < \alpha23 < 0°$ or a relationship $(-90°- \alpha23) < \alpha34 < - \alpha23$ for $0° < \alpha23 < 90°$;

h11. determining, by means of the measuring system (6), a fourth width W4 of the tool (1) in the measuring zone of the measuring system, wherein the fourth width W4 equals the distance measured along the lateral direction (8) (X-direction) between the first outer edge (32) and the second outer edge (33) of the further rotated predetermined part of the machining end (5) of the tool (1);

h12. determining, by means of the processing unit, an angular deviation $\delta$ of the tool (1) with respect to an optimum machining direction according to a desired angular deviation accuracy on the basis of the determined third width W3 and the determined fourth width W4.

5. The method according to claim 4, wherein the second angle of rotation $\alpha34$ follows a relationship $(2|\alpha23| - 1°) \leq \alpha34 \leq (2|\alpha23| + 1°)$, in particular $(2|\alpha23| - 0.5°) \leq \alpha34 \leq (2|\alpha23| + 0.5°)$, preferably $(2|\alpha23| - 0.1°) \leq \alpha34 \leq (2|\alpha23| + 0.1°)$, even more preferably wherein $2|\alpha23| = - \alpha34$ for $-90° < \alpha23 < 0°$, or a relationship $(2(\alpha23) -1°) \leq - \alpha34 \leq (2(\alpha23) + 1°)$, in particular $(2(\alpha23) - 0.5°) \leq - \alpha34 \leq (2(\alpha23) + 0.5°)$, preferably $(2(\alpha23) - 0.1°) \leq - \alpha34 \leq (2(\alpha23) + 0.1°)$, even more preferably $2(\alpha23) = - \alpha34$ for $0° < \alpha23 < 90°$.

6. The method according to any of previous claims 1 to 5, wherein determining, by means of the measuring system (6), the shape or spatial characteristics of the tool (1) before introducing the predetermined part of the machining end (5) of the tool (1) into the measuring zone of the measuring system (6).

7. The method according to claim 6, wherein an identification code on the tool (1) is used for determining the shape or spatial characteristics of the tool (1).

8. The method according to any of the previous claims 1 to 7, wherein the measuring system (6) is a laser beam measuring system adapted to determine the widths (W1, W2, W3, W4) of the tool (1) in the measuring zone at a lateral displacement allowing a predetermined measuring speed in the range of 10 mm/s - 250 mm/s, preferably 25 mm/s - 250 mm/s, even more preferably 50 mm/s - 250 mm/s.

9. The method according to any of the previous claims 1 to 8, wherein the method further comprising the steps of:

x1. rotating, by means of a motorised rotation of the tool holder rotational axis (45), the predetermined part of the machining end (5) of the tool (1) from the first initial position over the determined angular deviation $\delta$ of the tool (1) determined according to any of the claims 1 or 8;

x2. measuring, by means of the measuring system (6), a first lateral distance L1 between a lateral tool reference point (71) on the predetermined part of the machining end (5) of the tool (1) and a lateral reference point (72) in the measuring zone of the measuring system (6);

x3. Rotating further, by means of a motorised rotation of the tool holder rotational axis (45), the predetermined part of the machining end (5) of the tool (1) over an angle of 180°;

x4. measuring, by means of the measuring system (6), a second lateral distance L2 between the lateral tool reference point (71) on the tool (1) and the lateral reference point (72) in the measuring zone of the 180° rotated predetermined part of the machining end (5) of the tool (1);

x5. determining, by means of the processing unit, a lateral deviation (17) of the tool (1) based on the measured first lateral distance L1 and the measured second lateral distance L2.

10. The method according to any of previous claims 1 to 9, wherein the method further comprising the steps of:

y1. rotating, by means of a motorised rotation of the tool holder rotational axis (45), the predetermined part of the machining end (5) of the tool (1) from the first initial position over the determined angular deviation $\delta$ of the tool (1) determined according to any of the claims 1 or 8;

y2. rotating further, by means of a motorised rotation of the tool holder rotational axis (45), the predetermined part of the machining end (5) of the tool (1) over an angle of 90°;

y3. measuring, by means of the measuring system (6), a first longitudinal distance L01 between a longitudinal tool reference point (81) on the predetermined part of the machining end (5) of the tool (1) and a longitudinal reference point (82) in the measuring zone of the measuring system (6);

y4. Rotating further, by means of a motorised rotation of the tool holder rotational axis (45), the predetermined part of the machining end (5) of the tool (1) over an angle of 180°;

y5. measuring, by means of the measuring system (6), a second longitudinal distance L02 between the longitudinal tool reference point (81) on the predetermined part of the machining end (5) of the tool (1) and the longitudinal reference point (82) in the measuring zone;

y6. determining, by means of the processing unit, a longitudinal deviation (11) of the tool (1) based on the first longitudinal distance L01 and the second longitudinal distance.

11. The method for calibrating cutting plotters according to any of the previous claims 1 to 10, wherein the tool (1) is selected from the group consisting of cutting tools and creasing tools.

12. A system for calibrating a tool (1) of a cutting plotter, **characterized in that** the system comprises

a. a tool-setting device (3) comprising a measuring system (6),

b. a tool holder (4) adapted to perform a motorised displacement of the tool (1) with respect to the tool-setting device (3);

wherein the tool-setting device (3) and the tool holder (4) are connected to a processing unit, wherein the processing unit is adapted for determining an angular deviation $\delta$ of the tool with respect to an optimum machining direction according to a desired angular deviation accuracy according to any of the previous claims 1 to 8, wherein the processing unit is adapted for determining a lateral deviation (17) of the tool (1) according to claim 9 or 11, and wherein the processing unit is adapted for determining a longitudinal deviation (11) according to claim 10 or 11, wherein the measuring system (6) is selected from the group consisting of an optical measuring system, a video measuring system and a scanner, and wherein the measuring system (6) defines a measuring zone for receiving at least a part of a machining end (5) of the tool (1).

13. The system for calibrating a tool (1) of a cutting plotter according to claim 12, wherein the optical measuring system is a laser measuring system, which laser measuring system is provided with a laser source adapted to generate at least one laser beam (19).

**14.** Use of the system according to claim 12 or 13 for calibrating tools (1) in a cutting plotter environment.

**15.** A computer program comprising instructions for causing the system for calibrating a tool (1) according to claim 12 or 13 to carry out the steps of the method according to any one of the claims 1 to 11.

**Patentansprüche**

**1.** Verfahren zum Kalibrieren eines Werkzeugs (1) eines Schneidplotters, wobei das Werkzeug (1) in Kontakt mit einem Werkzeughalter (4) steht, der mit einer Bearbeitungseinheit verbunden ist, wobei das Werkzeug (1) ein Bearbeitungsende (5) aufweist, das sich zwischen einer ersten Außenkante (32) und einer zweiten Außenkante (33) entlang einer seitlichen Richtung (8) (X-Richtung) erstreckt, **dadurch gekennzeichnet, dass** das Verfahren die folgenden Schritte umfasst:

h1. Einbringen, mittels einer motorischen Verschiebung des Werkzeughalters (4), eines vorbestimmten Teils des Bearbeitungsendes (5) des Werkzeugs (1) in eine erste Anfangsposition in einer Messzone eines Messsystems (6) einer Werkzeugeinstellvorrichtung (3), wobei die Werkzeugeinstellvorrichtung (3) mit der Bearbeitungseinheit verbunden ist;

h2. Bestimmen, mittels des Messsystems (6), einer ersten Breite W1 des Werkzeugs (1) in der Messzone des Messsystems, wobei die erste Breite W1 gleich dem entlang der seitlichen Richtung (8) (X-Richtung) gemessenen Abstand zwischen der ersten Außenkante (32) und der zweiten Außenkante (33) des vorbestimmten Teils des Bearbeitungsendes (5) des Werkzeugs (1) ist;

h3. Drehen, mittels einer motorisierten Drehung einer Werkzeughalterdrehachse (45), des vorbestimmten Teils des Bearbeitungsendes (5) des Werkzeugs (1) über einen vorbestimmten ersten Drehwinkel $\alpha12$, wobei der erste Drehwinkel $\alpha12$ im Bereich von -90° bis +90° in Bezug auf die erste Anfangsposition liegt und von 0° verschieden ist, und wobei die Werkzeughalterdrehachse (45) im Wesentlichen senkrecht zur Messzone des Messsystems (6) steht;

h5. Bestimmen, mittels des Messsystems (6), einer zweiten Breite W2 des Werkzeugs (1) in der Messzone des Messsystems, wobei die zweite Breite W2 gleich dem entlang der seitlichen Richtung (8) (X-Richtung) gemessenen Abstand zwischen der ersten Außenkante (32) und der zweiten Außenkante (33) des gedrehten vorbestimmten Teils des Bearbeitungsendes (5) des Werkzeugs (1) ist;

h6. Bestimmen, mittels der Verarbeitungseinheit, einer Winkelabweichung $\delta$ des Werkzeugs (1) bezüglich einer optimalen Bearbeitungsrichtung gemäß einer gewünschten Winkelabweichungsgenauigkeit auf der Grundlage der bestimmten ersten Breite W1 und der bestimmten zweiten Breite W2.

**2.** Verfahren nach Anspruch 1, umfassend, vor dem Bestimmen der ersten Breite W1 des Werkzeugs (1) in der Messzone des Messsystems, einen Schritt des Drehens, mittels einer motorisierten Drehung der Werkzeughalterdrehachse (45), des vorbestimmten Teils des Bearbeitungsendes (5) des Werkzeugs (1) über einen vorbestimmten ersten Anfangsdrehwinkel $\alpha01$, wobei der vorbestimmte erste Anfangsdrehwinkel $\alpha01$ im Bereich von -90° bis 90° in Bezug auf die erste Anfangsposition liegt und von 0° verschieden ist, wobei der erste Drehwinkel $\alpha12$ einer Beziehung $|\alpha01| < \alpha12 < (90°+ |\alpha01|)$ für -90° < $\alpha01$ < 0° oder einer Beziehung $(-90°- \alpha01) < \alpha12 < -\alpha01$ für 0° < $\alpha01$ < 90° folgt.

**3.** Verfahren nach Anspruch 2, wobei der erste Drehwinkel $\alpha12$ einer Beziehung $(2|\alpha01| - 1°) \leq \alpha12 \leq (2|\alpha01| + 1°)$, insbesondere $(2|\alpha01| - 0,5°) \leq \alpha12 \leq (2|\alpha01| + 0,5°)$, vorzugsweise $(2|\alpha01| - 0,1°) \leq \alpha12 \leq (2|\alpha01| + 0,1°)$, noch bevorzugter $2|\alpha01| - \alpha12$ für -90° < $\alpha01$ < 0° folgt, oder einer Beziehung $(2(\alpha01) -1°) \leq -\alpha12 \leq (2(\alpha01) + 1°)$, insbesondere $(2(\alpha01) - 0,5°) \leq -\alpha12 \leq (2(\alpha01) + 0,5°)$, vorzugsweise $(2(\alpha01) - 0,1°) \leq - \alpha12 \leq (2(\alpha01) + 0,1°)$, noch mehr bevorzugt $2(\alpha01) = -\alpha12$ für 0° < $\alpha01$ < 90° folgt.

**4.** Verfahren nach einem der vorhergehenden Ansprüche 2 oder 3, wobei das Verfahren ferner die folgenden Schritte umfasst:

h7. Drehen, mittels einer motorisierten Drehung der Werkzeughalterdrehachse (45), des vorbestimmten Teils des Bearbeitungsendes (5) des Werkzeugs (1) aus der ersten Anfangsposition über die bestimmte Winkelabweichung $\delta$ des Werkzeugs (1) in eine zweite Anfangsposition;

h8. weiteres Drehen, mittels einer motorisierten Drehung der Werkzeughalterdrehachse (45), des vorbestimmten Teils des Bearbeitungsendes (5) des Werkzeugs (1) über einen vorbestimmten zweiten Anfangsdrehwinkel $\alpha23$, wobei $\alpha23$ im Bereich von -90° bis 90° in Bezug auf die zweite Anfangsposition liegt und sich von 0° unterscheidet;

h9. Bestimmen, mittels des Messsystems (6), einer dritten Breite W3 des Werkzeugs (1) in der Messzone des Messsystems, wobei die dritte Breite W3 gleich dem entlang der seitlichen Richtung (8) (X-Richtung) gemessenen Abstand zwischen der ersten Außenkante (32) und der zweiten Außenkante (33) des weiter gedrehten vorbestimmten Teils des Bearbeitungsendes (5) des Werkzeugs (1) ist;

h10. weiteres Drehen, mittels einer motorisierten Drehung der Werkzeughalterdrehachse (45), des gedrehten vorbestimmten Teils des Bearbeitungsendes (5) des Werkzeugs (1) über einen vorbestimmten zweiten Drehwinkel $\alpha34$, wobei der zweite Drehwinkel $\alpha34$ einer Beziehung $|\alpha23| < \alpha34 < (90°+ |\alpha23|)$ für $-90° < \alpha23 < 0°$ oder einer Beziehung $(-90°- \alpha23) < \alpha34 < -\alpha23$ für $0° < \alpha23 < 90°$ folgt;

h11. Bestimmen, mittels des Messsystems (6), einer vierten Breite W4 des Werkzeugs (1) in der Messzone des Messsystems, wobei die vierte Breite W4 gleich dem entlang der seitlichen Richtung (8) (X-Richtung) gemessenen Abstand zwischen der ersten Außenkante (32) und der zweiten Außenkante (33) des weiter gedrehten vorbestimmten Teils des Bearbeitungsendes (5) des Werkzeugs (1) ist;

h12. Bestimmen, mittels der Verarbeitungseinheit, einer Winkelabweichung $\delta$ des Werkzeugs (1) bezüglich einer optimalen Bearbeitungsrichtung gemäß einer gewünschten Winkelabweichungsgenauigkeit auf der Grundlage der bestimmten dritten Breite W3 und der bestimmten vierten Breite W4.

5. Verfahren nach Anspruch 4, wobei der zweite Drehwinkel $\alpha34$ einer Beziehung $(2|\alpha23| - 1°) \leq \alpha34 \leq (2|\alpha23| + 1°)$, insbesondere $(2|\alpha23| - 0,5°) \leq -\alpha34 \leq (2|\alpha23| + 0,5°)$, vorzugsweise $(2|\alpha23| - 0,1°) \leq -\alpha34 \leq (2|\alpha23| + 0,1°)$, noch bevorzugter wobei $2|\alpha23| = -\alpha34$ für $-90° < \alpha23 < 0°$ folgt, oder einer Beziehung $(2(\alpha23) -1°) \leq -\alpha34 \leq (2(\alpha23) + 1°)$, insbesondere $(2(\alpha23) -0,5°) \leq -\alpha34 \leq (2(\alpha23) + 0,5°)$, vorzugsweise $(2(\alpha23) - 0,1°) \leq -\alpha34 \leq (2(\alpha23) + 0,1°)$, noch mehr bevorzugt $2(\alpha23) = -\alpha34$ für $0° < \alpha23 < 90°$ folgt.

6. Verfahren nach einem der vorhergehenden Ansprüche 1 bis 5, wobei das Bestimmen, mittels des Messsystems (6), der Form oder der räumlichen Eigenschaften des Werkzeugs (1) stattfindet, bevor der vorbestimmte Teil des Bearbeitungsendes (5) des Werkzeugs (1) in die Messzone des Messsystems (6) eingebracht wird.

7. Verfahren nach Anspruch 6, wobei ein Identifikationscode auf dem Werkzeug (1) zum Bestimmen der Form oder der räumlichen Eigenschaften des Werkzeugs (1) verwendet wird.

8. Verfahren nach einem der vorhergehenden Ansprüche 1 bis 7, wobei das Messsystem (6) ein Laserstrahlmesssystem ist, das dazu eingerichtet ist, die Breiten (W1, W2, W3, W4) des Werkzeugs (1) in der Messzone bei einer seitlichen Verschiebung zu bestimmen, die eine vorbestimmte Messgeschwindigkeit im Bereich von 10 mm/s - 250 mm/s, vorzugsweise 25 mm/s - 250 mm/s, noch bevorzugter 50 mm/s - 250 mm/s, erlaubt.

9. Verfahren nach einem der vorhergehenden Ansprüche 1 oder 8, wobei das Verfahren ferner die folgenden Schritte umfasst:

x1. Drehen, mittels einer motorisierten Drehung der Werkzeughalterdrehachse (45), des vorbestimmten Teils des Bearbeitungsendes (5) des Werkzeugs (1) aus der ersten Anfangsposition über die nach einem der Ansprüche 1 oder 8 bestimmte Winkelabweichung $\delta$ des Werkzeugs (1);

x2. Messen, mittels des Messsystems (6), eines ersten seitlichen Abstands L1 zwischen einem seitlichen Werkzeugreferenzpunkt (71) auf dem vorbestimmten Teil des Bearbeitungsendes (5) des Werkzeugs (1) und einem seitlichen Referenzpunkt (72) in der Messzone des Messsystems (6);

x3. weiteres Drehen, mittels einer motorisierten Drehung der Werkzeughalterdrehachse (45), des vorbestimmten Teils des Bearbeitungsendes (5) des Werkzeugs (1) über einen Winkel von 180°;

x4. Messen, mittels des Messsystems (6), eines zweiten seitlichen Abstands L2 zwischen dem seitlichen Werkzeugreferenzpunkt (71) am Werkzeug (1) und dem seitlichen Referenzpunkt (72) in der Messzone des um 180° gedrehten vorbestimmten Teils des Bearbeitungsendes (5) des Werkzeugs (1);

x5. Bestimmen, mittels der Verarbeitungseinheit, einer seitlichen Abweichung (17) des Werkzeugs (1) auf der Grundlage des gemessenen ersten seitlichen Abstands L1 und des gemessenen zweiten seitlichen Abstands L2.

10. Verfahren nach einem der vorhergehenden Ansprüche 1 bis 9, wobei das Verfahren ferner die folgenden Schritte umfasst:

y1. Drehen, mittels einer motorisierten Drehung der Werkzeughalterdrehachse (45), des vorbestimmten Teils des Bearbeitungsendes (5) des Werkzeugs (1) aus der ersten Anfangsposition über die nach einem der Ansprüche 1 oder 8 bestimmte Winkelabweichung $\delta$ des Werkzeugs (1);

y2. weiteres Drehen, mittels einer motorisierten Drehung der Werkzeughalterdrehachse (45), des vorbestimmten Teils des Bearbeitungsendes (5) des Werkzeugs (1) über einen Winkel von 90°;

y3. Messen, mittels des Messsystems (6), eines ersten Längsabstands L01 zwischen einem Längsreferenzpunkt (81) des Werkzeugs auf dem vorbestimmten Teil des Bearbeitungsendes (5) des Werkzeugs (1) und einem Längsreferenzpunkt (82) in der Messzone des Messsystems (6) ;

y4. weiteres Drehen, mittels einer motorisierten Drehung der Werkzeughalterdrehachse (45), des vorbestimmten Teils des Bearbeitungsendes (5) des Werkzeugs (1) über einen Winkel von 180°;

y5. Messen, mittels des Messsystems (6), eines zweiten Längsabstands L02 zwischen dem Längsreferenzpunkt (81) des Werkzeugs auf dem vorbestimmten Teil des Bearbeitungsendes (5) des Werkzeugs (1) und dem Längsreferenzpunkt (82) in der Messzone;

y6. Bestimmen, mittels der Verarbeitungseinheit, einer Längsabweichung (11) des Werkzeugs (1) auf der Grundlage des ersten Längsabstands L01 und des zweiten Längsabstands.

**11.** Verfahren zum Kalibrieren von Schneidplottern nach einem der vorhergehenden Ansprüche 1 bis 10, wobei das Werkzeug (1) aus der Gruppe bestehend aus Schneidwerkzeugen und Rillwerkzeugen ausgewählt ist.

**12.** System zum Kalibrieren eines Werkzeugs (1) eines Schneidplotters, **dadurch gekennzeichnet, dass** das System umfasst:

a. eine Werkzeugeinstellvorrichtung (3), umfassend ein Messsystem (6),
b. einen Werkzeughalter (4), der dazu eingerichtet ist, eine motorisierte Verschiebung des Werkzeugs (1) in Bezug auf die Werkzeugeinstellvorrichtung (3) durchzuführen; wobei die Werkzeugeinstellvorrichtung (3) und der Werkzeughalter (4) mit einer Verarbeitungseinheit verbunden sind, wobei die Verarbeitungseinheit dazu eingerichtet ist, eine Winkelabweichung 5 des Werkzeugs in Bezug auf eine optimale Bearbeitungsrichtung gemäß einer gewünschten Winkelabweichungsgenauigkeit nach einem der vorhergehenden Ansprüche 1 bis 8 zu bestimmen, wobei die Verarbeitungseinheit dazu eingerichtet ist, eine seitliche Abweichung (17) des Werkzeugs (1) nach Anspruch 9 oder 11 zu bestimmen, und wobei die Verarbeitungseinheit dazu eingerichtet ist, eine Längsabweichung (11) nach Anspruch 10 oder 11 zu bestimmen, wobei das Messsystem (6) aus der Gruppe bestehend aus einem optischen Messsystem, einem Videomesssystem und einem Scanner ausgewählt ist, und wobei das Messsystem (6) eine Messzone zur Aufnahme zumindest eines Teils eines Bearbeitungsendes (5) des Werkzeugs (1) definiert.

**13.** System zum Kalibrieren eines Werkzeugs (1) eines Schneidplotters nach Anspruch 12, wobei das optische Messsystem ein Lasermesssystem ist, das mit einer Laserquelle bereitgestellt ist, die dazu eingerichtet ist, mindestens einen Laserstrahl (19) zu erzeugen.

**14.** Verwenden des Systems nach Anspruch 12 oder 13 zum Kalibrieren von Werkzeugen (1) in einer Schneidplotterumgebung.

**15.** Computerprogramm, umfassend Anweisungen, die das System zum Kalibrieren eines Werkzeugs (1) nach Anspruch 12 oder 13 veranlassen, die Schritte des Verfahrens nach einem der Ansprüche 1 bis 11 durchzuführen.

## Revendications

**1.** Procédé d'étalonnage d'un outil (1) d'un traceur de découpage, l'outil (1) étant en contact avec un porte-outil (4) qui est relié à une unité de traitement, l'outil (1) comportant une extrémité (5) d'usinage s'étendant entre un premier bord extérieur (32) et un deuxième bord extérieur (33) suivant une direction latérale (8) (direction X), **caractérisé en ce que** le procédé comporte les étapes consistant à :

h1. introduire, au moyen d'un déplacement motorisé du porte-outil (4), une partie prédéterminée de l'extrémité (5) d'usinage de l'outil (1) jusqu'à une première position initiale dans une zone de mesure d'un système (6) de mesure d'un dispositif (3) de réglage d'outil, le dispositif (3) de réglage d'outil étant relié à l'unité de traitement ;
h2. déterminer, au moyen du système (6) de mesure, une première largeur W1 de l'outil (1) dans la zone de mesure du système de mesure, la première largeur W1 égalant la distance mesurée suivant la direction latérale (8) (direction X) entre le premier bord extérieur (32) et le deuxième bord extérieur (33) de la partie prédéterminée de l'extrémité (5) d'usinage de l'outil (1) ;
h3. faire tourner, au moyen d'une rotation motorisée d'un axe (45) de rotation du porte-outil, la partie prédéterminée de l'extrémité (5) d'usinage de l'outil (1) sur un premier angle de rotation prédéterminé $\alpha12$, le premier angle de rotation $\alpha12$ se trouvant dans la plage de -90° à +90° par rapport à la première position initiale et étant différent de 0°, et l'axe (45) de rotation du porte-outil étant sensiblement perpendiculaire à la zone de mesure du système (6) de mesure ;

h5. déterminer, au moyen du système (6) de mesure, une deuxième largeur W2 de l'outil (1) dans la zone de mesure du système de mesure, la deuxième largeur W2 égalant la distance mesurée suivant la direction latérale (8) (direction X) entre le premier bord extérieur (32) et le deuxième bord extérieur (33) de la partie prédéterminée pivotée de l'extrémité (5) d'usinage de l'outil (1) ;

h6. déterminer, au moyen de l'unité de traitement, un écart angulaire $\delta$ de l'outil (1) par rapport à une direction d'usinage optimum en fonction d'une précision souhaitée d'écart angulaire d'après la première largeur W1 déterminée et la deuxième largeur W2 déterminée.

2. Procédé selon la revendication 1, comportant, avant de déterminer la première largeur W1 de l'outil (1) dans la zone de mesure du système de mesure, une étape consistant à faire tourner, au moyen d'une rotation motorisée de l'axe (45) de rotation du porte-outil, la partie prédéterminée de l'extrémité (5) d'usinage de l'outil (1) sur un premier angle initial de rotation prédéterminé $\alpha01$, le premier angle initial de rotation prédéterminé $\alpha01$ se trouvant dans la plage de -90° à 90° par rapport à la première position initiale et étant différent de 0°, le premier angle de rotation $\alpha12$ suivant une relation $|\alpha01| < \alpha12 < (90°+|\alpha01|)$ pour $-90° < \alpha01 < 0°$ ou une relation $(-90°-\alpha01) < \alpha12 < -\alpha01$ pour $0° < \alpha01 < 90°$.

3. Procédé selon la revendication 2, le premier angle de rotation $\alpha12$ suivant une relation $(2|\alpha0| - 1°) \leq \alpha12 \leq (2|\alpha01| + 1°)$, en particulier $(2|\alpha01| - 0,5°) \leq \alpha12 \leq (2|\alpha01| + 0,5°)$, de préférence $(2|\alpha01| - 0,1°) \leq \alpha12 \leq (2|\alpha01| + 0,1°)$, idéalement $2|\alpha01| - \alpha12$ pour $-90° < \alpha01 < 0°$, ou une relation $(2(\alpha01) - 1°) \leq -\alpha12 \leq (2(\alpha01) + 1°)$, en particulier $(2(\alpha01) - 0,5°) \leq -\alpha12 \leq (2(\alpha01) + 0,5°)$, de préférence $(2(\alpha01) - 0,1°) \leq -\alpha12 \leq (2(\alpha01) + 0,1°)$, idéalement $2(\alpha01) = -\alpha12$ pour $0° < \alpha01 < 90°$.

4. Procédé selon l'une quelconque des revendications 2 ou 3 qui précèdent, le procédé comportant en outre les étapes consistant à :

h7. faire tourner, au moyen d'une rotation motorisée de l'axe (45) de rotation du porte-outil, la partie prédéterminée de l'extrémité (5) d'usinage de l'outil (1) à partir de la première position initiale sur l'écart angulaire déterminé $\delta$ de l'outil (1) jusque dans une deuxième position initiale ;

h8. faire tourner en outre, au moyen d'une rotation motorisée de l'axe (45) de rotation du porte-outil, la partie prédéterminée de l'extrémité (5) d'usinage de l'outil (1) sur un deuxième angle initial de rotation prédéterminé $\alpha23$, $\alpha23$ se trouvant dans la plage de -90° à 90° par rapport à la deuxième position initiale et étant différent de 0° ;

h9. déterminer, au moyen du système (6) de mesure, une troisième largeur W3 de l'outil (1) dans la zone de mesure du système de mesure, la troisième largeur W3 égalant la distance mesurée suivant la direction latérale (8) (direction X) entre le premier bord extérieur (32) et le deuxième bord extérieur (33) de la partie prédéterminée de l'extrémité (5) d'usinage de l'outil (1) ayant subi la rotation supplémentaire ;

h10. faire tourner en outre, au moyen d'une rotation motorisée de l'axe (45) de rotation du porte-outil, la partie prédéterminée pivotée de l'extrémité (5) d'usinage de l'outil (1) sur un deuxième angle de rotation prédéterminé $\alpha34$, le deuxième angle de rotation $\alpha34$ suivant une relation $|\alpha23| < \alpha34 < (90°+ |\alpha23|)$ pour $-90° < \alpha23 < 0°$ ou une relation $(-90°- \alpha23) < \alpha34 < -\alpha23$ pour $0° < \alpha23 < 90°$ ;

h11. déterminer, au moyen du système (6) de mesure, une quatrième largeur W4 de l'outil (1) dans la zone de mesure du système de mesure, la quatrième largeur W4 égalant la distance mesurée suivant la direction latérale (8) (direction X) entre le premier bord extérieur (32) et le deuxième bord extérieur (33) de la partie prédéterminée de l'extrémité (5) d'usinage de l'outil (1) ayant subi la rotation supplémentaire ;

h12. déterminer, au moyen de l'unité de traitement, un écart angulaire $\delta$ de l'outil (1) par rapport à une direction d'usinage optimum en fonction d'une précision souhaitée d'écart angulaire d'après la troisième largeur W3 déterminée et la quatrième largeur W4 déterminée.

5. Procédé selon la revendication 4, le deuxième angle de rotation $\alpha34$ suivant une relation $(2|\alpha23| - 1°) \leq \alpha34 \leq (2|\alpha23| + 1°)$, en particulier $(2|\alpha23| - 0,5°) \leq -\alpha34 \leq (2|\alpha23| + 0,5°)$, de préférence $(2|\alpha23| - 0,1°) \leq -\alpha34 \leq (2|\alpha23| + 0,1°)$, où idéalement $2|\alpha23| = -\alpha34$ pour $-90° < \alpha23 < 0°$, ou une relation $(2(\alpha23) - 1°) \leq -\alpha34 \leq (2(\alpha23) + 1°)$, en particulier $(2(\alpha23) - 0,5°) \leq -\alpha34 \leq (2(\alpha23) + 0,5°)$, de préférence $(2(\alpha23) - 0,1°) \leq -\alpha34 \leq (2(\alpha23) + 0,1°)$, idéalement $2(\alpha23) = -\alpha34$ pour $0° < \alpha23 < 90°$.

6. Procédé selon l'une quelconque des revendications 1 à 5 qui précèdent, comportant la détermination, au moyen du système (6) de mesure, de la forme ou des caractéristiques spatiales de l'outil (1) avant d'introduire la partie prédéterminée de l'extrémité (5) d'usinage de l'outil (1) dans la zone de mesure du système (6) de mesure.

7. Procédé selon la revendication 6, un code d'identification sur l'outil (1) étant utilisé pour déterminer la forme ou les caractéristiques spatiales de l'outil (1).

8. Procédé selon l'une quelconque des revendications 1 à 7 qui précèdent, le système (6) de mesure étant un système de mesure par faisceau laser prévu pour déterminer les largeurs (W1, W2, W3, W4) de l'outil (1) dans la zone de mesure avec un déplacement latéral autorisant une vitesse de mesure prédéterminée dans la plage de 10 mm/s à 250 mm/s, de préférence 25 mm/s à 250 mm/s, idéalement 50 mm/s à 250 mm/s.

9. Procédé selon l'une quelconque des revendications 1 à 8 qui précèdent, le procédé comportant en outre les étapes consistant à :

   x1. faire tourner, au moyen d'une rotation motorisée de l'axe (45) de rotation du porte-outil, la partie prédéterminée de l'extrémité (5) d'usinage de l'outil (1) à partir de la première position initiale sur l'écart angulaire déterminé δ de l'outil (1) déterminé selon l'une quelconque des revendications 1 ou 8 ;
   x2. mesurer, au moyen du système (6) de mesure, une première distance latérale L1 entre un point (71) de référence latérale d'outil sur la partie prédéterminée de l'extrémité (5) d'usinage de l'outil (1) et un point (72) de référence latérale dans la zone de mesure du système (6) de mesure ;
   x3. faire tourner en outre, au moyen d'une rotation motorisée de l'axe (45) de rotation du porte-outil, la partie prédéterminée de l'extrémité (5) d'usinage de l'outil (1) sur un angle de 180° ;
   x4. mesurer, au moyen du système (6) de mesure, une deuxième distance latérale L2 entre le point (71) de référence latérale d'outil sur l'outil (1) et le point (72) de référence latérale dans la zone de mesure de la partie prédéterminée de l'extrémité (5) d'usinage de l'outil (1) tournée de 180° ;
   x5. déterminer, au moyen de l'unité de traitement, un écart latéral (17) de l'outil (1) d'après la première distance latérale L1 mesurée et la deuxième distance latérale L2 mesurée.

10. Procédé selon l'une quelconque des revendications 1 à 9 qui précèdent, le procédé comportant en outre les étapes consistant à :

   y1. faire tourner, au moyen d'une rotation motorisée de l'axe (45) de rotation du porte-outil, la partie prédéterminée de l'extrémité (5) d'usinage de l'outil (1) à partir de la première position initiale sur l'écart angulaire déterminé δ de l'outil (1) déterminé selon l'une quelconque des revendications 1 ou 8 ;
   y2. faire tourner en outre, au moyen d'une rotation motorisée de l'axe (45) de rotation du porte-outil, la partie prédéterminée de l'extrémité (5) d'usinage de l'outil (1) sur un angle de 90° ;
   y3. mesurer, au moyen du système (6) de mesure, une première distance longitudinale L01 entre un point (81) de référence longitudinale d'outil sur la partie prédéterminée de l'extrémité (5) d'usinage de l'outil (1) et un point (82) de référence longitudinale dans la zone de mesure du système (6) de mesure ;
   y4. faire tourner en outre, au moyen d'une rotation motorisée de l'axe (45) de rotation du porte-outil, la partie prédéterminée de l'extrémité (5) d'usinage de l'outil (1) sur un angle de 180° ;
   y5. mesurer, au moyen du système (6) de mesure, une deuxième distance longitudinale L02 entre le point (81) de référence longitudinale d'outil sur la partie prédéterminée de l'extrémité (5) d'usinage de l'outil (1) et le point (82) de référence longitudinale dans la zone de mesure ;
   y6. déterminer, au moyen de l'unité de traitement, un écart longitudinal (11) de l'outil (1) d'après la première distance longitudinale L01 et la deuxième distance longitudinale.

11. Procédé d'étalonnage de traceurs de découpage selon l'une quelconque des revendications 1 à 10 qui précèdent, l'outil (1) étant choisi dans le groupe constitué des outils de découpe et des outils de rainage.

12. Système d'étalonnage d'un outil (1) d'un traceur de découpage, **caractérisé en ce que** le système comporte

   a. un dispositif (3) de réglage d'outil comportant un système (6) de mesure,
   b. un porte-outil (4) prévu pour effectuer un déplacement motorisé de l'outil (1) par rapport au dispositif (3) de réglage d'outil ;

   le dispositif (3) de réglage d'outil et le porte-outil (4) étant liés à une unité de traitement, l'unité de traitement étant prévue pour déterminer un écart angulaire δ de l'outil par rapport à une direction d'usinage optimum en fonction d'une précision souhaitée d'écart angulaire selon l'une quelconque des revendications 1 à 8 qui précèdent, l'unité de traitement étant prévue pour déterminer un écart latéral (17) de l'outil (1) selon la revendication 9 ou 11, et l'unité de traitement étant prévue pour déterminer un écart longitudinal (11) selon la revendication 10 ou 11, le système (6) de mesure étant choisi dans le groupe constitué d'un système de mesure optique, d'un système de mesure vidéo et d'un scanner, et le système (6) de mesure définissant une zone de mesure destinée à recevoir au moins une partie d'une extrémité (5) d'usinage de l'outil (1).

13. Système d'étalonnage d'un outil (1) d'un traceur de découpage selon la revendication 12, le système de mesure optique étant un système de mesure par laser, ledit système de mesure par laser étant muni d'une source laser prévue pour générer au moins un faisceau laser (19).

14. Utilisation du système selon la revendication 12 ou 13 pour étalonner des outils (1) dans un environnement de traceur de découpage.

15. Programme informatique comportant des instructions destinées à amener le système d'étalonnage d'un outil (1) selon la revendication 12 ou 13 à réaliser les étapes du procédé selon l'une quelconque des revendications 1 à 11.

**Fig. 1**

**Fig. 2**

Fig. 3A

Fig. 3B

Fig. 4A

Fig. 4B

Fig. 5A

Fig. 5B

**Fig. 6**

**Fig. 7A**

**Fig. 7B**

EP 3 744 476 B1

Fig. 8

Fig. 9

Fig. 10A

Fig. 10B

Fig. 10C

36

Fig. 11A

Fig. 11B

Fig. 11C

Fig. 11D

Fig. 12A

Fig. 12B

Fig. 12C

Fig. 13

**REFERENCES CITED IN THE DESCRIPTION**

**Patent documents cited in the description**

- WO 2014130747 A
- US 2013104713 A
- EP 2687343 A